# EUROPÄISCHE PATENTSCHRIFT

(11) **EP 1 885 634 B1**
(45) Veröffentlichungstag und Bekanntmachung des Hinweises auf die Patenterteilung: **12.08.2009**
(21) Anmeldenummer: 06721244.9
(22) Anmeldetag: 08.05.2006
(51) Int. Cl.: B65G 47/54

(54) **UMSETZEINRICHTUNG FÜR TRANSPORTANLAGE**
TRANSFER DEVICE FOR A TRANSPORT SYSTEM
DISPOSITIF DE DEPLACEMENT D'UNE INSTALLATION DE TRANSPORT

(30) Priorität: 13.05.2005 AT 8262005
(43) Veröffentlichungstag der Anmeldung: 13.02.2008
(73) Patentinhaber: TGW Mechanics GmbH, 4600 Wels (AT)
(72) Erfinder: HANSL, Rudolf, 4020 Linz (AT)
(74) Vertreter: Ofner, Clemens
(86) Internationale Anmeldenummer: PCT/AT2006/000187
(87) Internationale Veröffentlichungsnummer: WO 2006/119521

(56) Entgegenhaltungen:
- DE-A1- 3 125 885
- DE-U1- 29 700 863

## Beschreibung

Die Erfindung bezieht sich auf eine Umsetzeinrichtung für eine zumindest eine Förderbahn aufweisende Transportanlage, insbesondere zum Ein- und/oder Ausschleusen von zu transportierendem Fördergut, mit einem Grundgestell, mit einer Umsetzvorrichtung umfassend ein Hubgestell, eine Antriebsvorrichtung sowie zumindest ein Transportmittel, welches eine Umsetzebene ausbildet, und mindestens eine Hubvorrichtung, mit welcher das Hubgestell und damit die durch das Transportmittel gebildete Umsetzebene reversibel aus einer unterhalb einer Förderebene der Transportanlage befindlichen Bereitschaftsstellung in eine oberhalb der Förderebene liegende Betriebsstellung verstellbar ist, und die eine Antriebsvorrichtung sowohl mit dem Transportmittel als auch mit der Hubvorrichtung antriebsverbunden ist.

Unterschiedliche Ausbildungen von Ein- und/oder Ausschleusegeräten sind bereits aus der DE 41 24 763 A1, der DE 195 00 148 C1 sowie der DE 198 00 549 A1 bekannt geworden, welche jeweils getrennte Antriebsvorrichtungen einerseits für den Antrieb des Transportmittels und andererseits für die Durchführung der Hubfunktion aufweisen, um das Ausschleusezugmittel, welches sich in der Ruhestellung unter dem Förderniveau befindet, über das Förderniveau anzuheben. Für die Durchführung der Hubbewegung werden hauptsächlich pneumatische oder elektromechanische Antriebsaggregate verwendet. Derartige Ein- und/oder Ausschleusegeräte waren in der Herstellung sowie deren Betrieb sehr kostenintensiv.

Eine andere Ablenkvorrichtung für Stückgut ist aus der DE 31 25 885 C2 bekannt geworden,-bei welcher das Stückgut von einer Förderbahn auf eine Abzweigbahn mittels eines von einem Motor angetriebenen, zur Abzweigbahn gerichteten Ausschleusers, dessen über Umlenkrollen geführter endloser Ausschleusgurt auf einem Hubteil unterstützend geführt und mit diesem beim Lauf des Motors über die Förderebene der Förderbahn anhebbar ist. Dabei ist der Ausschleusgurt über ein Antriebsrad bzw. über ein Treibrad für den Hubteil mit einem Wirbelstrombremsen-Antriebsteil verbunden, dessen Abtriebsteil den Hubteil des Ausschleusers über eine Hubvorrichtung betätigt. Dabei bewirkt die Wirbelstrombremse das Anheben des Hubteils während der Laufzeit des vom einzigen Motor angetriebenen Ausschleusgurtes und hält den Hubrahmen in seiner oberen Stellung, bis der Antriebsmotor wieder abgeschaltet wird. Die Wirbelstrombremse der Hubvorrichtung stellt zusätzliche Bauteile dar, welche gewartet werden müssen, wobei nicht in allen Anwendungsfällen das Auslangen in deren Betrieb gefunden werden konnte.

Eine andere Fördervorrichtung, insbesondere zum Ausschleusen und/oder Vereinzeln von Gütern ist aus der DE 297 00 863 U1 bekannt geworden. Dabei wird zum definierten Vereinzeln von entlang einer Förderstrecke transportierten Gütern die Förderstrecke aus mehreren, jeweils mit Abstand zueinander angeordneten Fördereinheiten gebildet. Die Fördervorrichtung umfasst wenigstens ein zwischen zwei aufeinander folgenden Fördereinheiten anordenbares Förderelement einer Fördereinrichtung, das mittels einer Hubeinrichtung reversibel aus einer unterhalb der Fördereinheiten befindlichen Außerbetriebsstellung in eine über den Fördereinheiten liegende Betriebsstellung zumindest annähernd vertikal verfahrbar ist. Dabei ist die Hubeinrichtung durch wenigstens eine Exzentereinrichtung gebildet. Zum Antreiben des Förderelements und der Exzentereinrichtung ist ein gemeinsamer Antrieb vorgesehen, welcher gleichzeitig die Hubeinrichtung als auch das Förderelement antreibt. Durch die feste Antriebsverbindung wird nach dem Start des Antriebsmotors in einem Durchlaufzyklus die Ausschleuse- und Hubbewegung nach oben und wieder nach unten durchgeführt, wobei in diesem Zeitintervall auch das Förderelement mit angetrieben ist und auch nur in dieser begrenzten Zeitspanne eine Förderbewegung durch das Förderelement durchgeführt werden kann. Ein weiterer Nachteil dieser Lösung liegt im relativ begrenzten Einsatzgebiet dieses Ein- und/oder Ausschleusers, da dieser nur auf eine bestimmte Ladungsgröße abgestimmt ist und bei wechselnder Ladegutgröße die Fördererabmessungen auf die neue Ladungsgröße abgestimmt werden muss.

Der vorliegenden Erfindung liegt die Aufgabe zugrunde, eine Umsetzeinrichtung zu schaffen, welche mit nur einer einzigen Antriebsvorrichtung das Auslangen findet und bei hoher Flexibilität der Förder- und Hubwege der Umsetzvorrichtung mit wenigen Antriebsteilen das Auslangen findet.

Diese Aufgabe der Erfindung wird dadurch gelöst, dass die Antriebsvorrichtung am Hubgestell gehaltert ist und die Hubvorrichtung eine Hubwippe umfasst, die am Grundgestell gegenüber einer Achse reversibel von einer Ruheposition in eine Halteposition verstellbar gelagert ist und bei in der Ruheposition befindlicher Hubwippe das Hubgestell mit dem Transportmittel in der Bereitschaftsstellung und bei in der Halteposition befindlicher Hubwippe das Hubgestell mit dem Transportmittel in der Betriebsstellung angeordnet ist, wobei die Hubwippe zumindest eine Kulissenbahn aufweist, welche in senkrechter Richtung zur Achse in einem unterschiedlichen Abstand zu dieser angeordnet ist, und dass ein Antriebselement der Antriebsvorrichtung mit der Kulissenbahn der Hubwippe ausgehend von deren Ruheposition bis hin zum Erreichen der Halteposition in Antriebsverbindung steht und nach dem Erreichen der Halteposition das Antriebselement außer Antriebsverbindung mit der Kulissenbahn steht, oder dass das Antriebselement der Antriebsvorrichtung stets mit der Kulissenbahn der Hubwippe in Antriebsverbindung steht und nach dem Erreichen der Halteposition die Antriebverbindung zwischen dem Antriebselement und der Antriebsvorrichtung unterbrochen ist.

Der sich durch die Merkmale dieses Anspruches ergebende überraschende Vorteil liegt darin, dass während der Durchführung der Hubbewegung das Antriebselement mit der damit zusammenwirkenden Kulissenbahn in Antriebsverbindung steht und erst bei Erreichen der vorbestimmten Position des Hubgestells diese Antriebsverbindung mechanisch unterbrochen wird. Dadurch ist es möglich, mit nur einer Antriebsvorrichtung für die Bewegung des Transportmittels als auch der Hubvorrichtung das Auslangen zu finden, wobei in der Halteposition ein ungehindertes weiteres Antreiben des Transportmittels möglich ist. Durch die mechanische Entkopplung der Antriebsverbindung fallen zusätzliche Sensoren und Steuerungseinrichtungen weg, wodurch weiters noch Kosten eingespart werden können und zusätzlich auch noch die Betriebssicherheit erhöht wird. Gleichfalls können dadurch variable Zykluszeiten für den Ein- und/oder Ausschleusvorgang bzw. Umsetzvorgang unabhängig von der Hubbewegung erzielt werden.

Vorteilhaft ist auch eine weitere Ausführungsform nach Anspruch 2, da dadurch eine einfachere Positionierung des Antriebselements in Bezug auf die Achse der Hubwippe erzielbar ist und so in weiterer Folge die Endlagen der Hubwippe, wie die Ruheposition und die Halteposition, einfach festlegbar sind.

Vorteilhaft sind weiters Ausbildungen nach den Ansprüchen 3 bis 6, da dadurch, bedingt durch das Eigengewicht des Hubgestells bzw. der Hubvorrichtung eine Selbstzentrierung der Hubwippe in deren Endlagen erzielbar ist und so zusätzliche Überwachungseinrichtung entfallen können. Weiters kann dadurch auch noch eine selbsttätige Rückstellung der Hubwippe in deren Ruheposition erzielt werden.

Durch die Ausbildung nach Anspruch 7 ist es möglich, die Hubhöhe der Umsetzeinrichtung vorzubestimmen sowie gleichzeitig dabei die Geschwindigkeit der Hubbewegung in Abhängigkeit vom sich ändernden Abstand der Kulissenbahn zur Achse zu beeinflussen. Dadurch kann die Kulissenbahn in Art einer Steuerkurve ausgebildet sein, mit welcher es beispielsweise möglich ist, eine rasche Hubbewegung bis hin zum Erfassen des umzusetzenden Fördergutes durchzuführen und anschließend daran mit einer dazu unterschiedlichen Hubbewegung das Fördergut anzuheben, wobei das Transportmittel der Umsetzeinrichtung stets mit gleicher Transportgeschwindigkeit weiterbewegt werden kann.

Nach anderen Ausführungsvarianten gemäß der Ansprüche 8 bis 10 wird eine gleichmäßige Hubgeschwindigkeit der Umsetzeinrichtung erzielt, wobei zusätzlich noch in der Ruheposition eine Selbstzentrierung der Hubwippe, ohne zusätzlicher Abschaltautomatik und Sensoren, erzielbar ist. Weiters kann dabei auch eine beliebige Förderrichtung des Transportmittels gewählt werden, wobei stets die Hubwippe in Verbindung mit dem Antriebselement stets die gleichen Hubbewegungen bei gleicher Hubhöhe durchführt.

Vorteilhaft sind auch Weiterbildungen nach Anspruch 11 oder 12, da dadurch ohne zusätzliche Halteelemente eine querkraftfreie Halterung der Hubwippe in zumindest einer der beiden Endpositionen erzielbar ist und so weiteres Gewicht und Kosten für zusätzliche Anlagenteile eingespart werden können.

Bei der Ausgestaltung nach Anspruch 13 oder 14 ist von Vorteil, dass dadurch die Hubwippe in einer stabilen Position, ohne zusätzlicher Haltemittel in deren Endposition gehalten werden kann, und erst bei Beaufschlagen des Antriebselements mit einer dazu gegenläufigen Drehbewegung die Rückstellung von der Halteposition in die Ruheposition erfolgt. Durch die Wahl des Winkel in Bezug zur horizontal verlaufenden Ebene kann die Haltekraft und damit verbunden die aufzuwendenden Rückstellkraft von der Halteposition in die Ruheposition der Hubwippe festgelegt werden.

Durch die Weiterbildung nach Anspruch 15 oder 16 wird erreicht, dass dadurch eine formschlüssige Antriebsverbindung geschaffen wird, durch welche eine sichere Relativverstellung der Umsetzvorrichtung gegenüber dem Grundgestell erzielt wird.

Durch die Ausbildungen nach den Ansprüchen 17 bis 20 wird eine Übertragung des Anlagengewichtes bzw. Stückgewichtes zwischen den miteinander in Eingriff stehenden Zahnverbindungen vermieden, wodurch ein einwandfreier Eingriff für die Antriebsverbindung sichergestellt und damit eine verschleißfreie Antriebsverbindung geschaffen wird. Somit können Stützkräfte zwischen dem Antriebselement und der Hubwippe übertragen werden, ohne dass damit ein Einfluss auf die miteinander in Eingriff bzw. Antriebsverbindung stehenden Teile erfolgt.

Vorteilhaft sind aber auch Ausbildung nach den Ansprüchen 21 bis 25, da dadurch mittels mechanischer Anschläge die beiden Endlagen auf beiden Seiten der Hubwippe festgelegt sind und so bei Erreichen der Halteposition keine zusätzliche Abschaltsensorik vorzusehen ist, wodurch wiederum Kosten eingespart werden können und eine höhere Betriebssicherheit erzielbar ist.

Gemäß einer Ausbildung wie im Anspruch 26 oder 27 beschrieben, wird eine sichere Trennung der Antriebsverbindung zwischen dem Antriebselement und der Kulissenbahn der Hubwippe erzielt, wobei nach Erreichen dieser Stellung trotzdem ein weiterer, ungestörter Antrieb des Transportmittels und damit eine unbegrenzte Weiterförderung des Stückgutes ermöglicht wird.

Dabei erweisen sich Ausgestaltungen nach den Ansprüchen 28 bis 31 als vorteilhaft, weil dadurch eine einfache und auf kleinstem Raum Platz findende Antriebseinheit geschaffen werden kann, welche auf einfache Art und Weise mit der gemeinsamen Antriebsvorrichtung in Wirkverbindung gebracht werden kann. Weiters ist dadurch auch noch ein einfacher Austausch von einzelnen Komponenten möglich, wodurch eine rasche Umrüstung an sich ändernde Betriebsbedingungen einfach und kostengünstig ermöglicht wird.

Nach einer vorteilhaften Weiterbildung gemäß Anspruch 32 wird eine andere Möglichkeit der Antriebsverbindung zwischen dem Antriebselement und der Hubwippe geschaffen, bei welcher das Anlagengewicht zusätzlich für die Aufbringung der notwendigen Reibkraft für eine sichere Antriebsverbindung miteinbezogen werden kann.

Von Vorteil sind aber auch Ausbildungen nach den Ansprüchen 33 bis 41, da dadurch bei Erreichen des oberen Totpunktes der Hubwippe, also deren Halteposition, mittels zusammenwirkender, mechanischer Anschläge die Hubbewegung begrenzt und eine eindeutige Lage der Umsetzvorrichtung erzielt wird, wobei hier keine zusätzliche Abschaltsensorik notwendig ist. Durch das Zusammenwirken der mechanischen Anschläge und das Unterbrechen der Antriebsverbindung infolge einer Momentübertragung, kann ein weiterer ungestörter Betrieb des Transportmittels für die Umsetzung des Fördergutes erfolgen. Weiters wird dabei eine ungehinderte Schwenkbewegung der Hubwippe relativ gegenüber dem Traggestell bzw. des Antriebselements erzielt. Weiters kann durch die Wahl der Lagerung des Anschlagrades der Verschleiß zwischen den Anschlagelementen und dem Anschlag im Bereich des Antriebselements, wesentlich herabgesetzt werden, wodurch eine wesentlich höhere Lebensdauer erzielbar ist.

Gemäß einer Ausbildung wie im Anspruch 42 oder 43 beschrieben, wird eine sichere Trennung der Antriebsverbindung zwischen dem Antriebselement und der Kulissenbahn der Hubwippe erzielt, wobei nach Erreichen dieser Stellung trotzdem ein weiterer, ungestörter Antrieb des Transportmittels und damit eine unbegrenzte Weiterförderung des Stückgutes ermöglicht wird.

Dabei erweist sich eine Ausgestaltung nach Anspruch 44 als vorteilhaft, weil dadurch eine einfache und auf kleinstem Raum Platz findende Antriebseinheit geschaffen werden kann, welche auf einfache Art und Weise mit der gemeinsamen Antriebsvorrichtung in Wirkverbindung gebracht werden kann. Weiters ist dadurch auch noch ein einfacher Austausch von einzelnen Komponenten möglich, wodurch eine rasche Umrüstung an sich ändernde Betriebsbedingungen einfach und kostengünstig ermöglicht wird.

Gemäß Anspruch 45 oder 46 wird eine noch bessere Kraftübertragung vom Antriebselement auf die Kulissenbahn erzielt, welche zusätzlich noch durch das Andrückelement erhöht werden kann. Gleichfalls wird aber auch eine bessere Führung der Hubwippe relativ zum Antriebselement erzielt.

Bei den Ausbildungen gemäß der Ansprüche 47 bis 51 wird ebenfalls eine mechanische Anschlagbegrenzung und Positionierung der Hubwippe relativ gegenüber dem Grundgestell erzielt, wobei bei Erreichen der Halteposition der Hubwippe wiederum keine Abschaltsensorik notwendig ist und darüber hinaus eine nahezu verschleißfreie und ungehinderte Weiterbewegung bzw. Drehbewegung des Antriebselements durchgeführt werden kann, ohne dass dabei eine Antriebsverbindung zwischen diesem und der Hubwippe erfolgt. Nach Änderung der Drehrichtung des Antriebselements erfolgt eine Rückstellung der Hubwippe von der Halteposition in dessen Ruheposition und es kann nachfolgend ein erneuter Ein- bzw. Ausschleusvorgang durchgeführt werden.

Schließlich ist aber auch eine Ausbildung wie im Anspruch 52 beschrieben möglich, da dadurch annähernd eine vertikale Relatiwerstellung der Umsetzvorrichtung relativ gegenüber dem Grundgestell erfolgt und dadurch so ein horizontaler Versatz des Transportmittels relativ gegenüber dem Grundgestell nahezu bzw. ausschließlich verhindert ist.

Die Erfindung wird im nachfolgenden anhand der in den Zeichnungen dargestellten Ausführungsbeispiele näher erläutert.

### Es zeigen:

- Fig. 1: eine beispielhafte, schematische Darstellung einer Transportanlage mit mehreren Förderbahnen sowie Umsetzeinrichtungen;
- Fig. 2: eine mögliche Ausbildung der erfindungsgemäßen Umsetzeinrichtung in deren Bereitschaftsstellung, in Ansicht und schematisch stark vereinfachter Darstellung;
- Fig. 3: die Umsetzeinrichtung nach Fig. 2, jedoch in der Betriebsstellung;
- Fig. 4: die Hubwippe der Umsetzeinrichtung in deren Ruheposition nach den Fig. 1 und 2, in Ansicht und schematisch vereinfachter Darstellung;
- Fig. 5: die Hubwippe nach Fig. 4 in einer Zwischenstellung zwischen Ruheposition und Halteposition;
- Fig. 6: die Hubwippe nach den Fig. 4 und 5 in deren Halteposition;
- Fig. 7: einen Teilbereich der Hubwippe nach den Fig. 4 bis 6 in der Ruheposition;
- Fig. 8: einen anderen Teilbereich der Hubwippe nach den Fig. 4 bis 6 in der Ruheposition;
- Fig. 9: einen weiteren Teilbereich der Hubwippe nach den Fig. 4 bis 6 in der Ruheposition;
- Fig. 10: den Teilbereich nach Fig. 7, jedoch in der Halteposition;
- Fig. 11: den Teilbereich nach Fig. 8, jedoch in der Halteposition;
- Fig. 12: den Teilbereich nach Fig. 9, jedoch in der Halteposition;
- Fig. 13: einen Teilbereich der Hubvorrichtung in Seitenansicht geschnitten, gemäß den Linien XIII - XIII in Fig. 4;
- Fig. 14: eine andere Ausbildung der Hubwippe der Umsetzeinrichtung in deren Ruheposition, in Ansicht und schematisch vereinfachter Darstellung;
- Fig. 15: die Hubwippe nach Fig. 14 in deren Halteposition;
- Fig. 16: einen Teilbereich der Hubwippe nach den Fig. 14 und 15 in der Ruheposition;
- Fig. 17: einen Teilbereich der Hubwippe nach den Fig. 14 und 15 in der Halteposition;
- Fig. 18: einen anderen Teilbereich der Hubwippe nach den Fig. 14 und 15 in der Ruheposition;
- Fig. 19: einen anderen Teilbereich der Hubwippe nach den Fig. 14 und 15 in der Halteposition;
- Fig. 20: einen Teilbereich der Hubvorrichtung, in Seitenansicht geschnitten, gemäß den Linien XX - XX in Fig. 15;
- Fig. 21: eine weitere mögliche Ausbildung der Hubvorrichtung, in Seitenansicht geschnitten;
- Fig. 22: eine weitere mögliche Ausbildung der Hubwippe der Umsetzeinrichtung in deren Ruheposition, in Ansicht und schematisch vereinfachter Darstellung;
- Fig. 23: eine andere Ausbildung eines Teilbereiches der Hubwippe der Umsetzeinrichtung in deren Ruheposition, in Ansicht und schematisch vereinfachter Darstellung;
- Fig. 24: eine weitere Ausbildungsmöglichkeit der Hubwippe der Umsetzeinrichtung in deren Ruheposition, in Ansicht und schematisch vereinfachter Darstellung;
- Fig. 25: eine andere mögliche Ausbildung der erfindungsgemäßen Umsetzeinrichtung in deren Bereitschaftsstellung, in Ansicht und schematisch stark vereinfachter Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

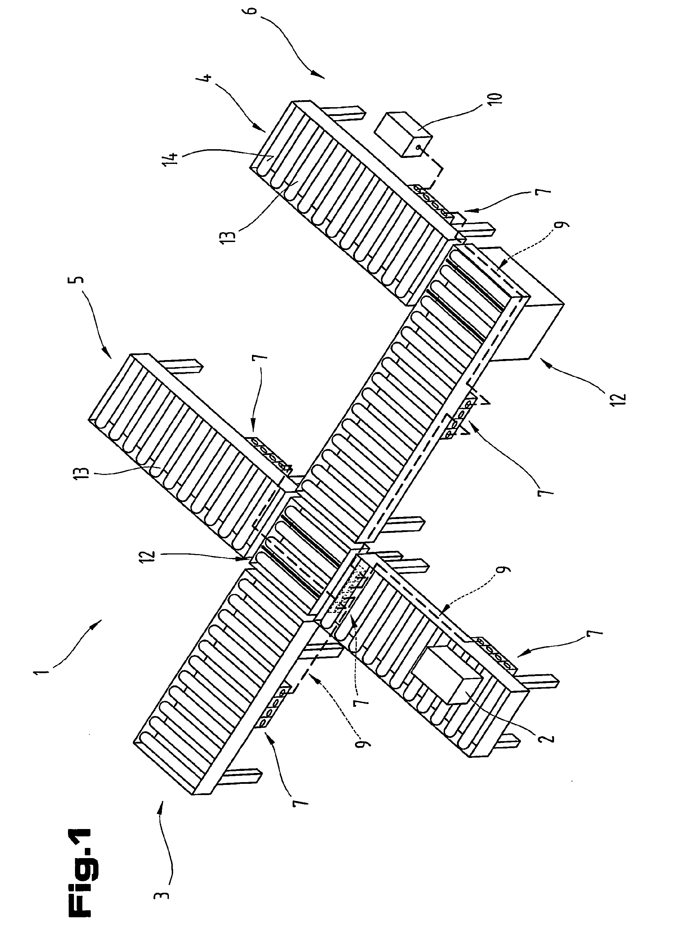

In Fig. 1 ist eine von vielen möglichen Ausführungsformen einer modular aufgebauten Transportanlage 1 für stückhafte Fördergüter 2 beispielhaft veranschaulicht. Das stückhafte Fördergut 2 bzw. Stückgut kann beispielsweise durch Pakete, Behälter, Werkstückträger, Werkteile oder Tablare, Paletten usw. gebildet sein, welche innerhalb der aufgebauten Transportanlage 1 mittels mehrerer, modular zusammengesetzter Förderbahnen 3, 4, 5 an unterschiedliche, jeweils gewünschte bzw. erforderliche Positionen verbracht werden können.

Die einzelnen Abläufe in der exemplarisch gezeigten Transportanlage 1 laufen dabei zumindest teilweise automatisiert ab, wofür ein elektrisches Steuerungssystem 6 ausgebildet ist, welches mehrere elektrische bzw. elektronische Steuervorrichtungen 7 umfasst. Insbesondere weist jede der Förderbahnen 3, 4, 5, oder zumindest die meisten der baulich eigenständig ausgeführten, modularen Förderbahnen 3, 4, 5 eine eigene Steuervorrichtung 7 zumindest zur automatisierten Steuerung der Funktionsabläufe der jeweiligen Förderbahnen 3, 4, 5 auf. Die Steuervorrichtungen 7 stehen über ein aus dem Stand der Technik bekanntes Datennetzwerk 9 zumindest untereinander in datentechnischer Verbindung. Durch die an das Datennetzwerk 9 angeschlossenen Steuervorrichtungen 7 wird zwischen den Steuervorrichtungen 7 der diversen Förderbahnen 3, 4, 5 ein geordneter Daten- bzw. Informationsaustausch bzw. eine rasche Datenübertragung ermöglicht, ohne dass eine Vielzahl von Informations- bzw. Datenleitungen erforderlich ist. Mittels der steuerungstechnisch aneinander gekoppelten Steuervorrichtungen 7 ist also eine Grundlage für einen plangemäßen Steuerungsablauf innerhalb der zusammengesetzten Transportanlage 1 geschaffen. Insbesondere ist durch funktionales Zusammenspiel der lokalen, jeweils steuerungstechnische Intelligenz aufweisenden Steuervorrichtungen 7 an den einzelnen Förderbahnen 3, 4, 5 ein automatisierter, plangemäßer Betrieb der Transportanlage 1 gewährleistet.

Das komplette Steuerungssystem 6 für das Fördersystem 1 kann beispielsweise auch einen den Steuervorrichtungen 7 steuerungstechnisch übergeordneten Kontrollrechner bzw. einen so genannten Materialflussrechner 10 umfassen, der über das Datennetzwerk 9 mit den einzelnen Steuervorrichtungen 7 verbunden ist. Der Materialflussrechner 10 kann durch eine beliebige speicherprogrammierbare Steuerung bzw. durch einen industriellen Personalcomputer oder durch eine sonstige, Steuerprogramme verarbeitende, Recheneinheit gebildet sein. Die einzelnen Steuervorrichtungen 7 sind dabei über den Datenbus 8 aufeinander folgend miteinander verbunden sowie über diesen Datenbus 8 mit dem Materialflussrechner 10 gekoppelt. Die Steuerungsarchitektur zwischen den einzelnen Steuervorrichtungen 7 und dem Materialflussrechner 10 kann also dezentrale, steuerungstechnisch intelligente bzw. zumindest zum Teil autonome Steuervorrichtungen 7 umfassen.

Im Bereich von einander kreuzenden bzw. abzweigenden Förderbahnen 3, 4, 5 sind schematisch vereinfacht dargestellte Umsetzeinrichtungen 12 gezeigt, die zum Ein- und/oder Ausschleusen bzw. Abzweigen von dem zu transportierenden Fördergut 2 dienen. Die Ausbildung der Umsetzeinrichtung 12 bzw. deren Wirkprinzip wird detailliert in den nachfolgenden Fig. beschrieben werden. Diese Transportanlage 1 weist eine durch Transportrollen 13 gebildete Förderebene 14 auf, auf welcher das Fördergut 2 bzw. Stückgut entlang der Förderbahnen 3, 4, 5 solange weiterbewegt wird, bis dass ein vorbestimmbarer Ein- und/oder Ausschleusvorgang bzw. Abzweigvorgang durch die Umsetzeinrichtung 12 durchgeführt werden soll.

Dabei sei erwähnt, dass die hier gezeigte und beschriebene Transportanlage 1 nur beispielhaft für eine Vielzahl von unterschiedlichen Einsatzzwecke für die Umsetzeinrichtung 12 gewählt worden ist und die Umsetzeinrichtung 12 auch bei beliebigen anderen Transporteinrichtungen bzw. Anlagen, insbesondere für die Stückgutförderung, eingesetzt werden kann. Dabei ist ein Fördern der Umsetzeinrichtung 12 in allen beliebigen Richtungen zur Förderrichtung, wie beispielsweise normal, parallel oder schräg dazu, möglich.

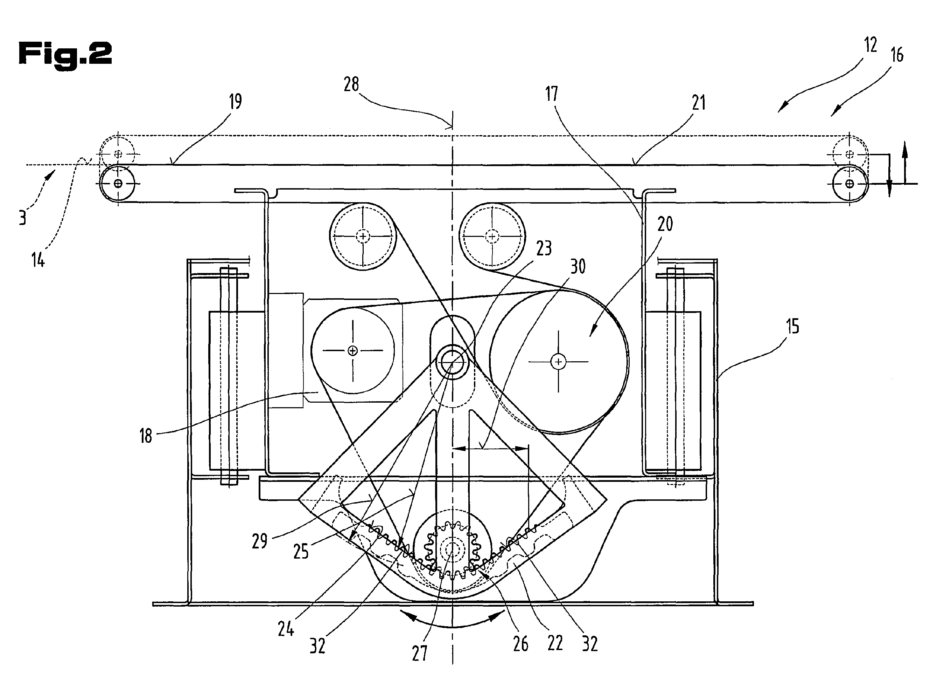

In den Fig. 2 bis 13 ist die Umsetzeinrichtung 12 sowie deren Komponenten in den unterschiedlichsten Ansichten gezeigt, um so das Wirkprinzip und das Zusammenspiel dieser Bauteile beschreiben zu können.

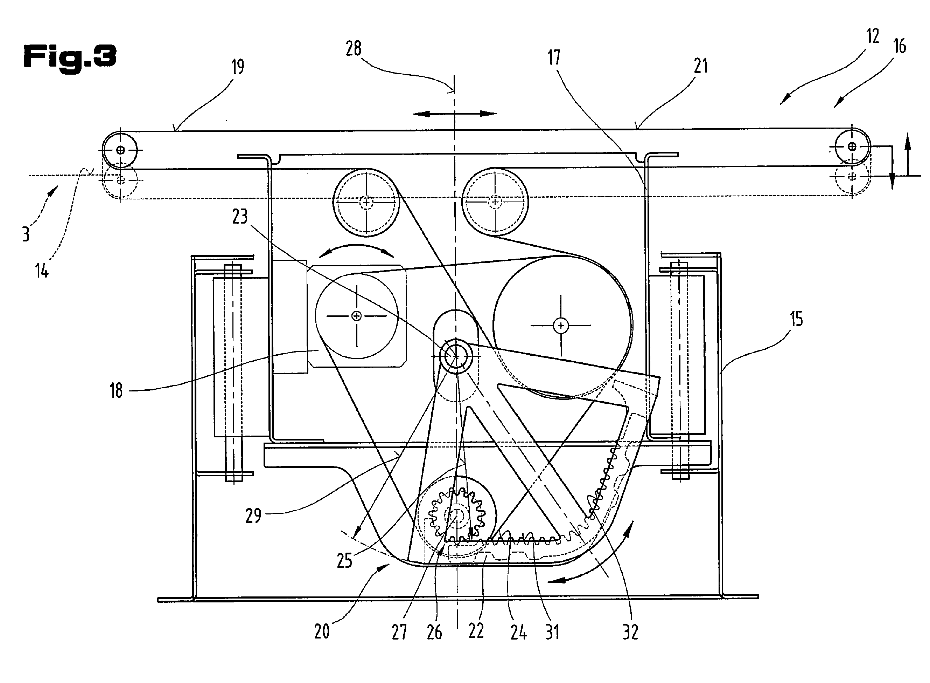

So ist in den Fig. 2 und 3 die Umsetzeinrichtung 12 schematisch in Ansicht und vergrößerter Darstellung gezeigt. Die Umsetzeinrichtung 12 umfasst ein Grundgestell 15, in welchem eine Umsetzvorrichtung 16 angeordnet ist. Die Umsetzvorrichtung 16 umfasst weiters ein Hubgestell 17, eine an diesem gehalterte Antriebsvorrichtung 18, wie beispielsweise einen Elektromotor bzw. Getriebemotor, sowie zumindest ein Transportmittel 19. Das Transportmittel 19 kann unterschiedlichst ausgebildet sein und beispielsweise durch ein endloses Band, eine Kette, einen Riemen, Rollen oder dgl. gebildet sein. Weiters umfasst die Umsetzvorrichtung 16 mindestens eine Hubvorrichtung 20, mit welcher das Hubgestell 17 relativ gegenüber dem Grundgestell 15 verlagerbar ist.

Das Transportmittel 19 bildet an dessen Oberseite eine Umsetzebene 21 aus, wobei durch die Hubvorrichtung 20 das Hubgestell 17 und damit die durch das Transportmittel 19 gebildete Umsetzebene 21 reversibel aus einer unterhalb der Förderebene 14 der Transportanlage 1 befindlichen Bereitschaftsstellung in eine oberhalb der Förderebene 14 liegende Betriebsstellung verstellbar ist. Weiters ist bei diesem Ausführungsbeispiel gezeigt, dass die Antriebsvorrichtung 18 sowohl mit dem Transportmittel 19 als auch mit der Hubvorrichtung 20 antriebsverbunden ist. Dies kann sowohl in direktem Wege als auch über zwischengeschaltete Vorgelege bzw. Getriebeanordnungen erfolgen.

Die Hubvorrichtung 20 umfasst eine Hubwippe 22, welche am Grundgestell 15 um eine bevorzugt parallel zur Umsetzebene 21 ausgerichtete Achse 23 reversibel von einer Ruheposition in eine Halteposition verstellbar, insbesondere verschwenkbar, gelagert ist. Der besseren Übersichtlichkeit halber wurde auf die detaillierte Darstellung der Lagerung der Hubwippe 22 im Grundgestell 15 verzichtet und das Grundgestell 15 nur bereichsweise dargestellt. Dabei kann die Achse 23 beispielsweise durch eine eigene im Grundgestell 15 gehalterte Schwenkachse gebildet sein, welche einen Schwenkmittelpunkt für die Hubwippe 22 ausbildet. Es wäre aber auch jede beliebige andere aus dem Stand der Technik bekannte Lagerungsart für die Hubwippe 22 einsetzbar. So könnte z.B. der Hubwippe 22 ein kreisringförmig ausgebildetes Lagerelement zugeordnet, insbesondere damit verbunden sein, und dieses seinerseits dreh- bzw. schwenkbar am Grundgestell 15 in bekannter Weise gelagert sein. Damit wird wiederum eine radiale Lagerung um einen virtuellen Schwenkmittelpunkt mit einer Achse 23 gebildet.

Befindet sich die Hubwippe 22 in der Ruheposition, ist das Hubgestell 17 mit dem Transportmittel 19 in der Bereitschaftsstellung unterhalb der Förderebene 14 angeordnet. Befindet sich hingegen die Hubwippe 22 in der verschwenkten Halteposition gem. Fig. 3, ist das Hubgestell 17 mit dem daran angeordneten Transportmittel 19 in der Betriebsstellung angeordnet, in welcher die Umsetzebene 21 oberhalb der Förderebene 14 angeordnet ist.

In der Bereitschaftsstellung der Umsetzvorrichtung 16 ist ein Transport in der Förderebene 14 an den Förderbahnen 3 bis 5 bis hin in den Bereich der Umsetzvorrichtung 16 möglich. Soll nun das Fördergut 2 bzw. Stückgut von einer Förderbahn 3 auf eine andere Förderbahn 4, 5 ein- bzw. ausgeschleust bzw. umgesetzt werden, wird das Hubgestell 17 und damit verbunden das Transportmittel 19 soweit angehoben, bis dass das Fördergut 2 von der Förderebene 14 der Förderbahn 3 abgehoben ist, daran anschließend mit dem Transportmittel 19 das Fördergut 2 auf die vorbestimmbare Förderbahn 4, 5 ein- und/oder ausgeschleust bzw. umgesetzt, wobei nach erfolgter Umsetzung des Hubgestell 17 und damit verbunden das Transportmittel 19 in die Bereitschaftsstellung, in welcher die Umsetzebene 21 unterhalb der Förderebene 14 angeordnet ist, zurückverstellt.

Zur relativen Verstellung des Hubgestells 17 dient die Hubvorrichtung 20, insbesondere die Hubwippe 22, welche zumindest eine Kulissenbahn 24 umfasst, die in senkrechter Richtung zur Achse 23 in einem unterschiedlichen Abstand 25 dazu angeordnet ist. Weiters umfasst die Hubvorrichtung 20 noch ein Antriebselement 26, das jedoch am Hubgestell 17 gehaltert und dort um eine parallel zur Achse 23 ausgerichtete Drehachse 27 drehbar ist. Das Antriebselement 26 ist gleichfalls mit der gemeinsamen Antriebsvorrichtung 18 antriebsverbunden. Dadurch ist es möglich, sowohl die relative Verstellung des Hubgestells 17 gegenüber dem Grundgestell 15, als auch das Transportmittel 19 über eine gemeinsame Antriebsvorrichtung 18 anzutreiben. Es wäre aber auch noch möglich, die Antriebsvorrichtung 18 im Bereich der Drehachse 27 anzuordnen und direkt, gegebenenfalls unter Zwischenschaltung eines Getriebes oder Vorgeleges, das Antriebselement 26 anzutreiben.

Das Antriebselement 26 ist bei diesem gezeigten Ausführungsbeispiel mit der Kulissenbahn 24 der Hubwippe 22 ausgehend von deren Ruheposition bis kurz vor bzw. bei dem Erreichen der Halteposition antriebsverbunden, wobei das Antriebselement 26 nach dem Erreichen der Halteposition außer Antriebsverbindung mit der Kulissenbahn 24 steht bzw. kommt. So ist es möglich, die Übertragung des Antriebsmomentes vom Antriebselement 26 auf die Kulissenbahn 24 zu unterbrechen, da die Antriebsverbindung in der Halteposition außer Eingriff steht.

Es wäre aber unabhängig davon auch noch möglich, das Antriebselement 26 mit der Kulissenbahn 24 in der Halteposition der Hubwippe 22 weiter in Eingriff zu belassen, jedoch die Übertragung des Antriebsmomentes zwischen dem Antriebselement 26 und der Antriebsvorrichtung 18 zu unterbrechen. Dies kann wiederum auf unterschiedlichste Weise nach dem bekannten Stand der Technik durch Antriebsmoment-Unterbrechungsmittel erfolgen. So wäre ein Einsatz von bedarfsweise schaltbaren Kupplungen, Rutschkupplungen, Wirbelstrombremsen usw. möglich, mit welchen die Antriebsunterbrechung im Antriebsstrang des zu übertragenden Antriebsmoments erfolgt. Damit steht zwar das Antriebselement 26 der Antriebsvorrichtung 18 stets mit der Kulissenbahn 24 der Hubwippe 22 in Antriebsverbindung, wobei nach dem Erreichen der Halteposition die Antriebverbindung zwischen dem Antriebselement 26 und der Antriebsvorrichtung 18 solange unterbrochen ist, bis eine Rückstellung in die Ruheposition erfolgt. Dies kann durch zuvor beschriebenen Bauteile erfolgen, wobei die Unterbrechung des Antriebsmoments auch im Bereich des Antriebselement 26 selbst erfolgen kann. Somit wird auch bei diesen verschiedenen Lösungsmöglichkeiten bei Erreichen der Halteposition die Hubbewegung beendet und es ist ein ungehindertes Weiterbewegen des Transportmittels 19 möglich, ohne dass dabei eine weitere Hubbewegung bzw. relative Verlagerung des Hubgestells 17 gegenüber dem Grundgestell 15 durchgeführt wird.

Befindet sich die Hubwippe 22 in der gegenüber der Ruheposition verschwenkten Halteposition - wie dies am besten aus der Fig. 3 zu ersehen ist - ist ein antriebsverbindender Eingriff zwischen dem Antriebselement 26 und der Kulissenbahn 24 aufgehoben bzw. unterbunden, wodurch die Antriebsvorrichtung 18 und das damit verbundene Transportmittel 19 solange in der gleichen Antriebsrichtung angetrieben werden kann, bis dass das oder die Fördergüter 2 vollständig das Transportmittel 19 verlassen und auf eine weitere Förderbahn 4, 5 umgesetzt worden sind.

Um eine Rückstellung der Umsetzvorrichtung 16 von der Betriebsstellung in die Bereitschaftsstellung zu bewirken, wird die Antriebsvorrichtung 18 in einer zur zuvor entgegengesetzten Drehrichtung betrieben. Dadurch kommt das Antriebselement 26 mit der Kulissenbahn 24 wiederum in Antriebsverbindung und es erfolgt die Rückstellung von der Betriebsstellung in die Bereitschaftsstellung, wobei auch die Hubwippe 22 von der verschwenkten Halteposition in deren Ruheposition rückverstellt wird. Die unterschiedlichen Ausbildungsmöglichkeiten des Antriebselements 26, der Hubwippe 22 sowie der Kulissenbahn 24 erfolgt in den nachfolgenden Figuren.

Wie weiters aus den Darstellungen der Fig. 2 und 3 zu ersehen ist, ist die Achse 23 für die Halterung bzw. Lagerung der Hubwippe 22 in senkrechter Richtung zu einer Transportrichtung des Transportmittels 19 ausgerichtet. Die Kulissenbahn 24 der Hubwippe 22 ist in Richtung der Achse 23 gesehen in etwa V-förmig ausgebildet, wobei die Kulissenbahn 24 an der Hubwippe 22 an einem der Achse 23 zugewandten Abschnitt angeordnet bzw. ausgebildet ist. Diese Kulissenbahn 24 kann wiederum aus mehreren Bauteilen zusammengesetzt sein, wie dies ebenfalls nachfolgend noch detaillierter beschrieben werden wird.

In der Fig. 2 ist die Ruheposition der Hubwippe 22 dargestellt, wobei hier zu ersehen ist, dass der Abstand 25 der Kulissenbahn 24 zur Achse 23 der Hubwippe 22 in einer vertikal durch die Achse 23 verlaufenden Ebene 28 ein Maximum beträgt. Durch die zuvor beschriebene V-förmige Ausbildung der Kulissenbahn 22 ist es auf einfache Art und Weise möglich, das gesamte Hubgestell 17 mit dem Transportmittel 19 in seiner gegenüber der Förderebene 14 abgesenkten Stellung - der zuvor beschriebenen Bereitschaftsstellung - ohne großen zusätzlichen Aufwand positioniert zu halten. Bei in der Bereitschaftsstellung befindlichem Hubgestell 17 ist die Hubwippe 22 in ihrer Ruheposition ausgerichtet.

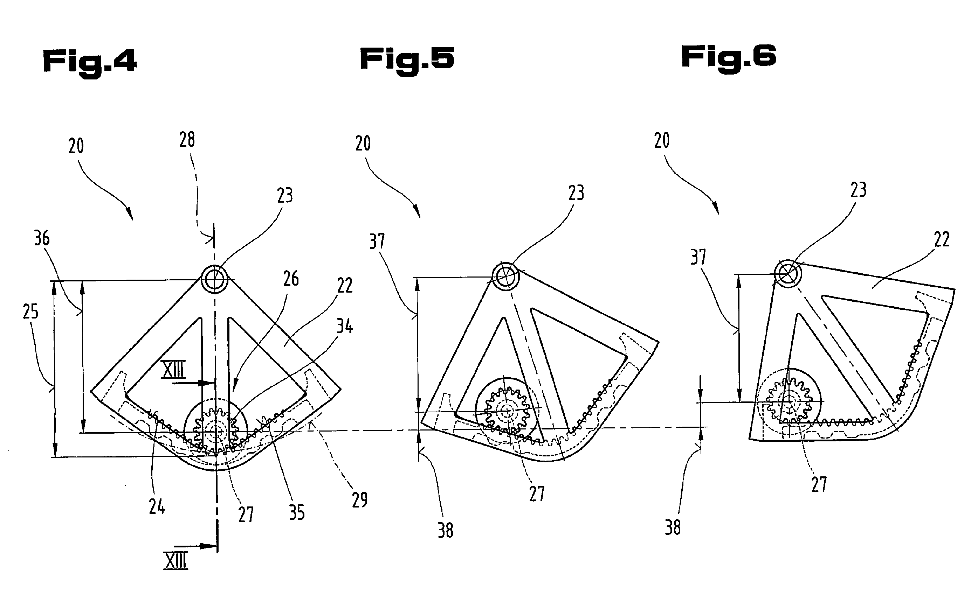

Weiters ist in der Fig. 4 in strichpunktierten Linien ausgehend vom maximalen Abstand 25 im Bereich der Ruheposition ein Kreisbogen eingezeichnet, dessen Mittelpunkt sich im Zentrum der Achse 23 befindet. Ein Radius dieses Kreisbogens ist mit dem Bezugszeichen 29 versehen. Wäre die Kulissenbahn 24 in Form dieses Kreisbogens ausgebildet, würde bei Verstellung der Hubwippe 22 keinerlei Relativverstellung zwischen dem Grundgestell 15 und dem Hubgestell 17 erzielt werden.

Der Längsverlauf der Kulissenbahn 24 ausgehend von der Ebene 28 kann unterschiedlichst gewählt werden, wobei stets ausgehend von der Ruheposition der Hubwippe 22 der Abstand 25 der Kulissenbahn 24 zur Achse 23 der Hubwippe 22 mit zunehmender Distanz 30 zur vertikal durch die Achse 23 verlaufenden Ebene 28 gegenüber dem zuvor beschriebenen maximalen Abstand 25 geringer bzw. kleiner ausgebildet ist. Durch einen unterschiedlichen Längsverlauf der Kulissenbahn 24 kann somit die Verstellgeschwindigkeit des Hubgestells 17 relativ gegenüber dem Grundgestell 15 beeinflusst werden. Je nach Abnahme des Abstandes 25 der Kulissenbahn 24 zur Achse 23 wird jener Weg festgelegt, welchen die Umsetzebene 21 ausgehend von der Bereitschaftsstellung hin in die Betriebsstellung zurücklegt.

Bei diesem hier gezeigten Ausführungsbeispiel weist die Kulissenbahn 24 Teilabschnitte 31, 32 auf, welche ausgehend von deren maximalen Abstand 25 zur Achse 23 jeweils geradlinig verlaufend ausgebildet sind. In der Ruheposition der Hubwippe 22 sind die Teilabschnitte 31, 32 bevorzugt symmetrisch zur Ebene 28 ausgebildet. Zwischen den beiden Teilabschnitten 31, 32 der Kulissenbahn 24 ist im Bereich von deren maximalen Abstand 25 zur Achse 23 ein konkav ausgebildeter Übergangsbereich 33 zur Verbindung der beiden Teilabschnitte 31, 32 angeordnet. Um ein Ein- und/oder Ausschleusen des Fördergutes 2 in beide Förderrichtungen zu ermöglichen, ist es vorteilhaft, wenn in der in der Fig. 2 dargestellten Ruheposition der Hubwippe 22 die Kulissenbahn 24 symmetrisch zur vertikal durch die Achse 23 verlaufende Ebene 28 ausgebildet ist. Dadurch kann die Antriebsvorrichtung 18 in beiden Drehrichtungen angetrieben werden und es erfolgt je nach gewählter Drehrichtung die gewünschte Förderrichtung für das Transportmittel 19, wobei unabhängig davon mittels der bevorzugt symmetrisch ausgebildeten Hubwippe 22 das Hubgestell 17 gegenüber dem Grundgestell 15 zumeist in vertikaler Richtung dazu verlagert wird.

Weiters ist es vorteilhaft, wenn in der Ruheposition und/oder der Halteposition der Hubwippe 22 die Drehachse 27 des Antriebselements 26 jeweils in senkrechter Richtung unterhalb der Achse 23 der Hubwippe 22 angeordnet ist. Durch die besondere Geometrie der Hubwippe 22 kommt das Antriebselement 26 in der Betriebsstellung genau unterhalb der Achse 23 zum Liegen und stützt sich schwerkraftfrei auf dieser ab. Dadurch ist keine zusätzliche Haltekraft für die Hubwippe 22 erforderlich.

In den Fig. 4 bis 6 ist vereinfacht eine mögliche Ausbildung der Hubwippe 22 mit dem damit in Antriebsverbindung stehenden Antriebselement 26 in unterschiedlichen Stellungen dargestellt, um die Wirkungsweise der Kulissenbahn 24 und der damit verbundenen Hubwirkung für das Hubgestell 17 vereinfacht erklären zu können.

Die Antriebsverbindung zwischen dem Antriebselement 26 und der Hubwippe 22, insbesondere der daran ausgebildeten Kulissenbahn 24, ist hier durch eine miteinander in Eingriff stehende Zahnverbindung, wie ein Zahnrad 34 mit einer Zahnleiste 35 gebildet. So bildet die Zahnleiste 35 einen Teilbereich bzw. Teilabschnitt der Kulissenbahn 24 aus. In der Fig. 4 ist die Ruheposition der Hubwippe 22 relativ zur Ebene 28, in der Fig. 5 eine Zwischenstellung während dem Verschwenkvorgang der Hubwippe 22 hin in die Halteposition und in der Fig. 6 die Halteposition der Hubwippe 22 gezeigt. Der maximale Abstand 25 zwischen der Kulissenbahn 24 und der Achse 23 und somit die Bereitschaftsstellung für das Hubgestell 17 ist in der Fig. 4 zu ersehen. Reduziert man den Abstand 25 in Abhängigkeit vom Durchmesser des verwendeten Zahnrades 34, so wird zwischen der Achse 23 der Hubwippe 22 und der Drehachse 27 des Antriebselements 26 ein weiterer Abstand 36 ausgebildet. Im Zuge der Drehbewegung des Antriebselements 26 und dem hier im Eingriff stehenden Zahnrad 34 mit der Zahnleiste 35 erfolgt durch entsprechende Führung des Hubgestells 17 im Grundgestell 15 - kann beispielsweise durch eine Linearführung erfolgen - durch die zuvor beschriebene Verkleinerung des Abstands 25 ein Anheben des Hubgestells 17 relativ zum Grundgestell 15, wodurch ein Abstand 37 zwischen der Drehachse 27 und der Achse 23 sich gegenüber dem zuvor in der Fig. 4 dargestellten Abstand 36 verringert. Ein Verstellweg 38 des Hubgestells 17 relativ gegenüber dem Grundgestell 15 ergibt sich durch Abzug des kürzeren Abstandes 37 - Fig. 6 - vom längeren Abstand 36 - Fig. 4.

Schließlich ist in der Fig. 6 der minimale Abstand 37 zwischen der Achse 23 und der Drehachse 27 erreicht und es ist der maximale Verstellweg 38 des Hubgestells 17 relativ gegenüber dem Grundgestell 15 erreicht.

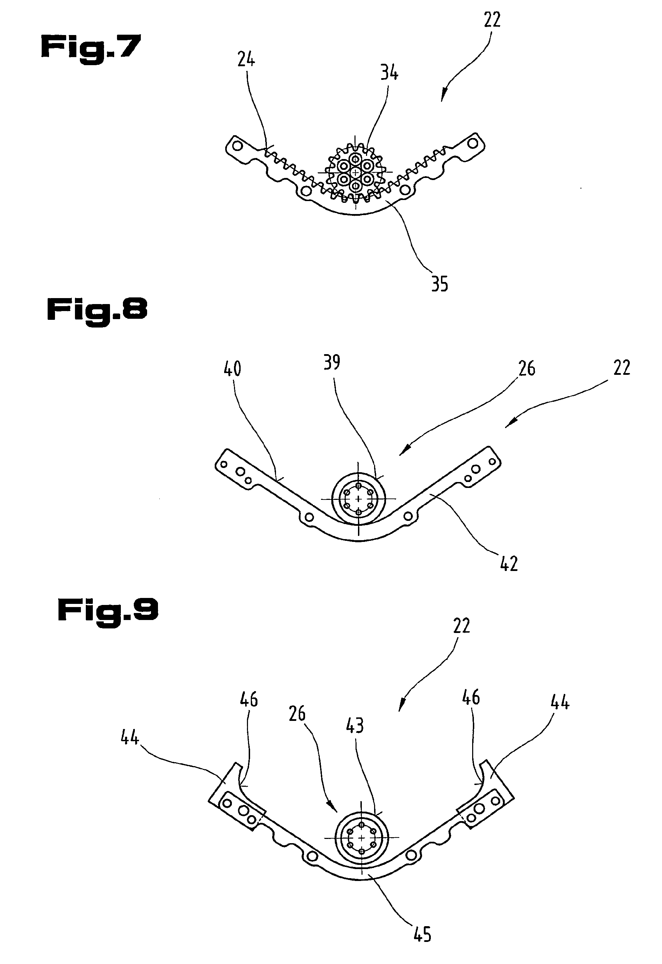

In den Fig. 7 bis 13 ist im Detail eine mögliche Ausbildung der Hubwippe 22 im Zusammenwirken mit dem Antriebselement 26 sowohl in der Ruheposition als auch in der verschwenkten Halteposition vereinfacht dargestellt. Wie zuvor bereits kurz in den Fig. 4 bis 6 beschrieben, erfolgt die Antriebsverbindung zwischen dem Antriebselement 26 und der Hubwippe 22 durch die miteinander in Eingriff stehende Zahnverbindung mittels des Zahnrades 34 und der Zahnleiste 35. Der besseren Übersichtlichkeit halber wurde auf diverse Verbindungselemente bzw. Halteelemente zwischen den einzelnen nachfolgend beschriebenen Bauteilen mit der Hubwippe 22 bzw. dem Antriebselement 26 verzichtet. Diese können frei nach dem bekannten Stand der Technik gewählt werden.

Die Hubwippe 22 kann auf der von der Achse 23 abgewendeten Seite durch einen in etwa L-förmig ausgebildeten Halterahmen gebildet werden, mit welchem die Zahnleiste 35, insbesondere unter Zwischenschaltung einer nicht näher bezeichneten Distanzleiste, verbunden ist. Durch die Antriebsverbindung zwischen dem Antriebselement 26 und der Hubwippe 22 wird das für die Verschwenkung der Hubwippe 22 und der damit verbundenen Anhebung des Hubgestells 17 notwendige Drehmoment übertragen.

Zur Abstützung des gesamten Gewichtes des Hubgestells 17 mit den daran angeordneten Ein- bzw. Vorrichtungen sowie dem umzusetzenden Fördergut 2 ist es zur Einstellung des Zahnspiels zwischen dem Zahnrad 34 und der Zahnleiste 35 vorteilhaft, wenn zusätzlich am Antriebselement 26 an dessen Umfang ein Abstützbereich 39 angeordnet bzw. ausgebildet ist, welcher an einer an der Hubwippe 22 ausgebildeten Stützfläche 40 abgestützt ist. Dieser Abstützbereich 39 kann beispielsweise am Antriebselement 26 durch ein vereinfacht dargestelltes Stützrad 41 gebildet sein. Die zuvor beschriebene Stützfläche 40 für das Antriebselement 26 kann im Bereich der Hubwippe 22 durch einen eigenen Bauteil, beispielsweise eine Stützschiene 42, gebildet sein, welche Bestandteil der Hubwippe 22 ist. Zur Einstellung eines exakten Zahneingriffes ist die Stützfläche 40 der Stützschiene 42 in ihrem Längsverlauf an den Längsverlauf der Zahnleiste 35 angepasst. Dadurch kann ein exaktes Zahnspiel zwischen dem Zahnrad 34 und der Zahnleiste 35 eingestellt werden, wodurch die Stützkraft zwischen dem Abstützbereich 39 und der Stützfläche 40 abgetragen wird und die Übertragung des Drehmomentes im Bereich der Zahnverbindung erfolgt.

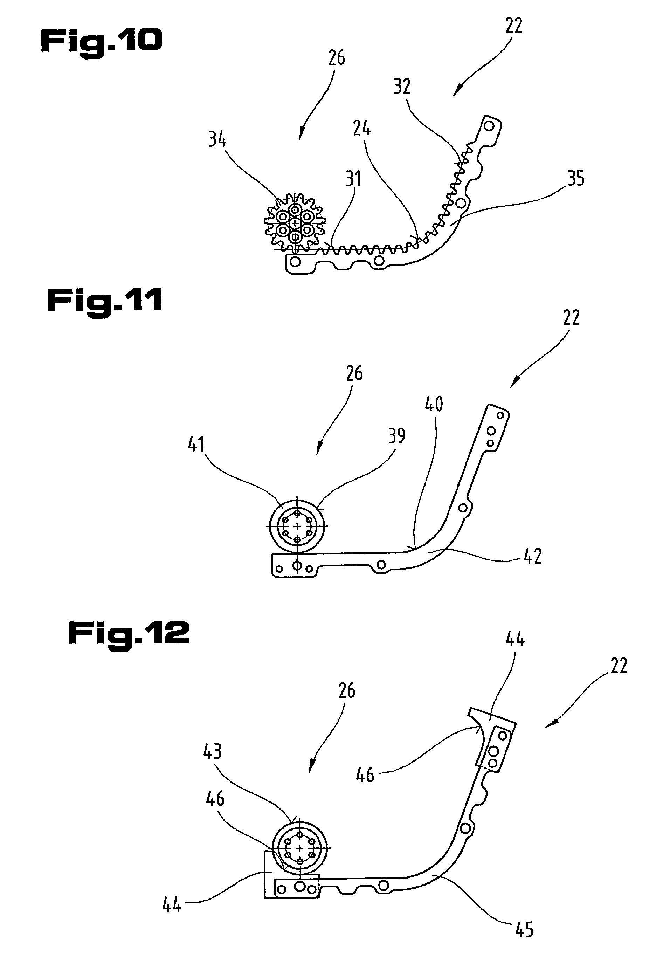

Wie aus einer Zusammenschau der Fig. 7 und 10 zu ersehen ist, und dies bereits auch zuvor beschrieben worden ist, steht die Antriebsvorrichtung 18 über das Antriebselement 26 mit der Hubwippe 22 ausgehend von der Ruheposition bis kurz vor Erreichen der Halteposition miteinander in Antriebsverbindung, wobei nach Erreichen der Halteposition die Antriebsverbindung zwischen der Antriebsvorrichtung 18 bzw. dem Antriebselement 26 und der Hubwippe 22 beispielsweise durch Freistellung der Zahnleiste 35 aufgehoben wird. Dabei erfolgt nach wie vor die Abstützung des Abstützbereiches 39 an der Stützfläche 40.

Zur Lagepositionierung der Hubwippe 22 relativ gegenüber dem feststehenden Grundgestell 15 in deren Halteposition für das Hubgestell 17 ist zwischen dem Antriebselement 26 an dessen Umfang weiters ein Anschlagbereich 43 vorgesehen, welcher nach Erreichen der Halteposition der Hubwippe 22 an einem an der Hubwippe 22 ausgebildeten Anschlagelement 44 zur Anlage kommt bzw. abgestützt ist. Wie aus einer Zusammenschau der Fig. 9 und 12 zu ersehen ist, kann der Anschlagbereich 43 des Antriebselements 26 ausgehend von der Ruheposition an der Hubwippe 22 außer Eingriff bzw. freigestellt sein und erst bei oder unmittelbar nach Erreichen der Halteposition am Anschlagelement 44 abgestützt sein. Ist die Hubwippe 22 symmetrisch ausgebildet, ist es vorteilhaft, wenn an den von einander abgewendeten Enden der Teilabschnitte 31, 32 der Kulissenbahn 24 je ein Anschlagelement 44 angeordnet ist. Darüber hinaus ist es möglich, dass die Anschlagelemente 44 an einer separaten Tragschiene 45 jeweils an deren Endbereichen gehaltert sind und diese wiederum einen weiteren Bauteil der Hubwippe 22 bilden. Um eine kollisionsfreie Verstellung bzw. Verschwenkung der Hubwippe 22 zu ermöglichen, entspricht ein Längsverlauf der Tragschiene 45 auf der der Achse 23 zugewendeten Seite in etwa jenem der Kulissenbahn 24, welche bei diesem Ausführungsbeispiel die Zahnleiste 35 ausbildet. Dabei kann eine minimale Distanzierung des Längsverlaufs der Tragschiene 44 gegenüber der Stützfläche 40 bzw. der Kulissenbahn 24 zur Freistellung erfolgen.

Das Anschlagelement 44 bildet eine dem Anschlagbereich 43 des Antriebselements 26 zugewendete Anschlagfläche 46 aus, welche in einem mit dem Anschlagelement 43 zusammenwirkenden Abschnitt gegengleich zum Anschlagbereich 43 ausgebildet ist. Durch den hier kreisrund ausgebildeten Anschlagbereich 43 am Antriebselement 26 entspricht die Anschlagfläche 46 einem Kreisbogenabschnitt. Dadurch wird eine nahezu vollflächige Anlage des gesamten Antriebselements 26, insbesondere dessen Anschlagbereich 43, am Anschlagelement 44 erzielt.

Dadurch, dass in der Halteposition die Antriebsverbindung zwischen dem Antriebselement 26 und der Hubwippe 44, insbesondere der Kulissenbahn 24, außer Eingriff steht, ist eine weitere Rotation bzw. Drehung des Antriebselements 26 in der am Anschlagelement 44 abgestützten Position möglich. Dadurch kann, wie bereits einleitend beschrieben, mit einer einzigen Antriebsvorrichtung 18 das Auslangen gefunden werden, wobei hier in der gleichen Drehrichtung das Transportmittel 19 solange weiter angetrieben werden kann, bis dass das Fördergut vollständig ein- bzw. ausgeschleust ist. Zur Unterbrechung der Antriebsverbindung ist die Zahnleiste 35 mit ihren daran angeordneten Zähnen in ihrer Längserstreckung kürzer ausgebildet bzw. enden diese vor dem Anschlagelement 44. Damit wird erreicht, dass bei zusammenwirkendem Anschlagbereich 43 des Antriebselements 26 mit dem Anschlagelement 44 der Hubwippe 22 das Zahnrad 34 außer Antriebsverbindung mit der Zahnleiste 35 steht bzw. kommt.

Weiters umfasst bei diesem Ausführungsbeispiel das Antriebselement 26 noch einen Grundkörper 47, an welchem bevorzugt das Zahnrad 34 sowie gegebenenfalls das Stützrad 41 gehaltert sind.

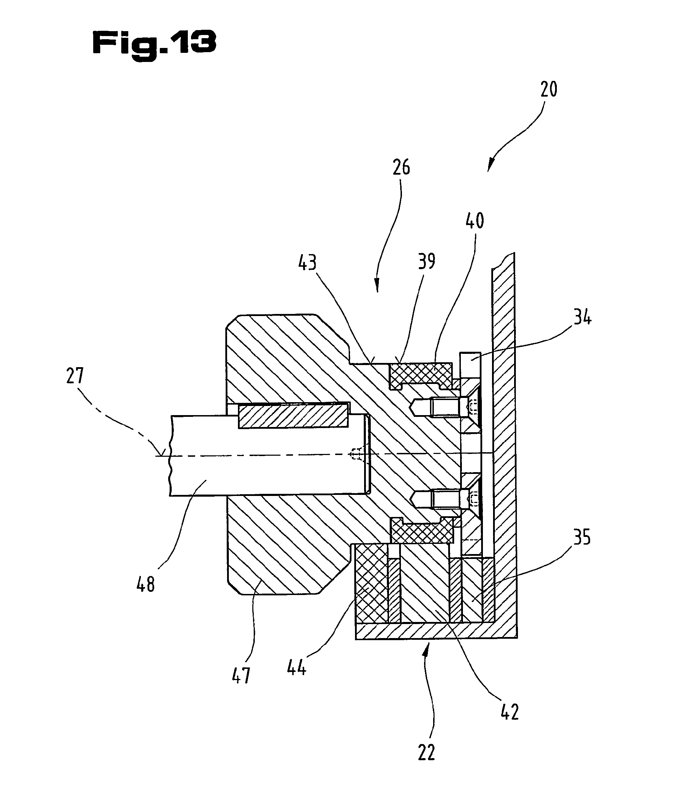

Wie nun am besten aus der Fig. 13 zu ersehen ist, ist das Zahnrad 34, der Abstützbereich 39, insbesondere das Stützrad 41, und der Anschlagbereich 43 unmittelbar nebeneinander in Richtung der Drehachse 27 am Grundkörper 47 angeordnet bzw. ausgebildet. Weiters ist es möglich, dass der Grundkörper 47 des Antriebselements 26 mit einer Antriebswelle 48 in bekannter Weise drehfest verbunden ist, wobei die Antriebswelle 48 ihrerseits im Hubgestell 17 drehbar gelagert ist und weiters die Antriebswelle 48 mit der gemeinsamen Antriebsvorrichtung 18 in Antriebsverbindung steht.

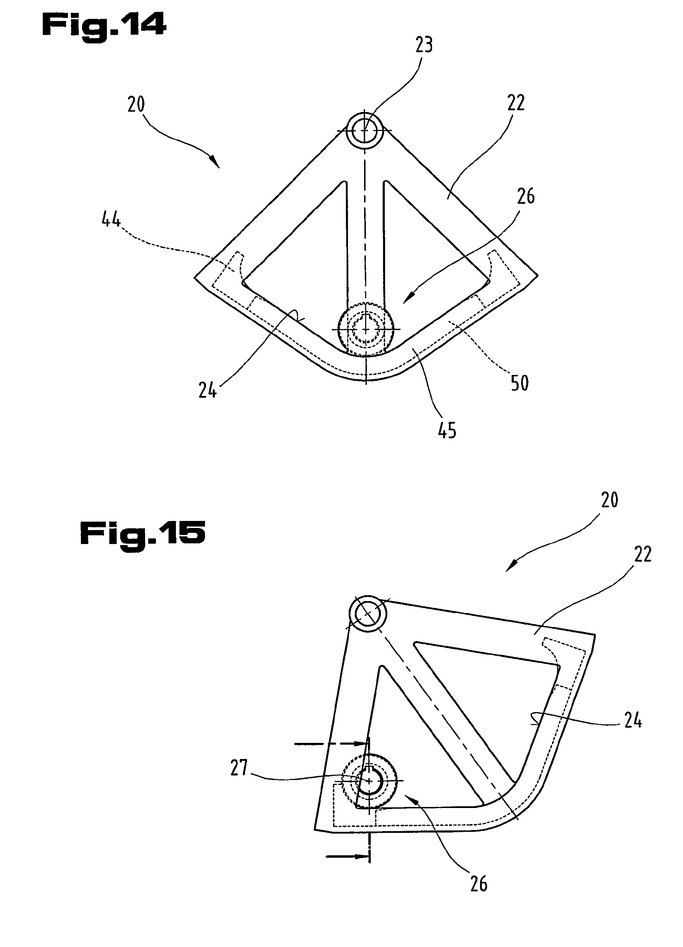

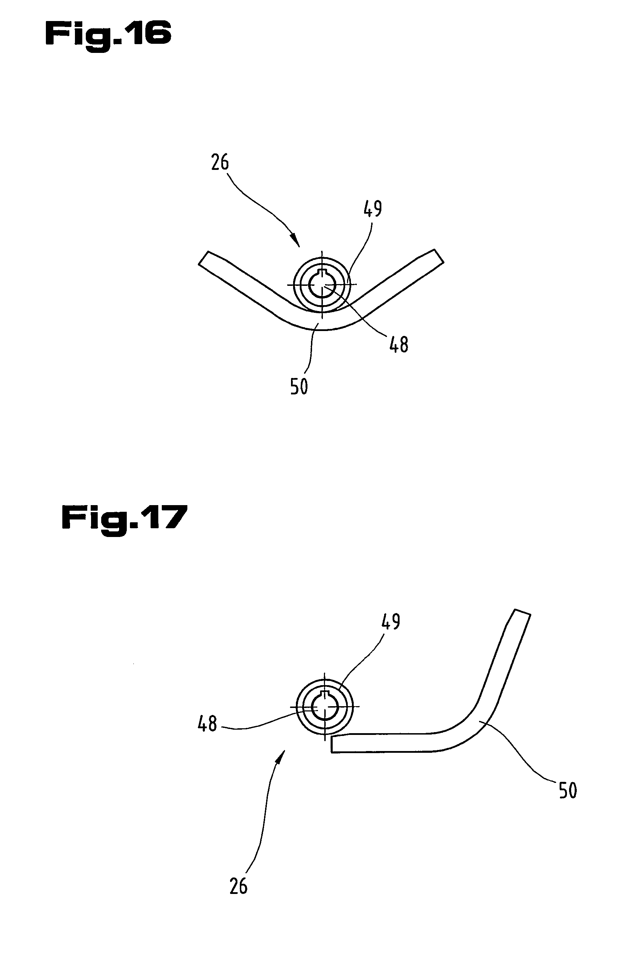

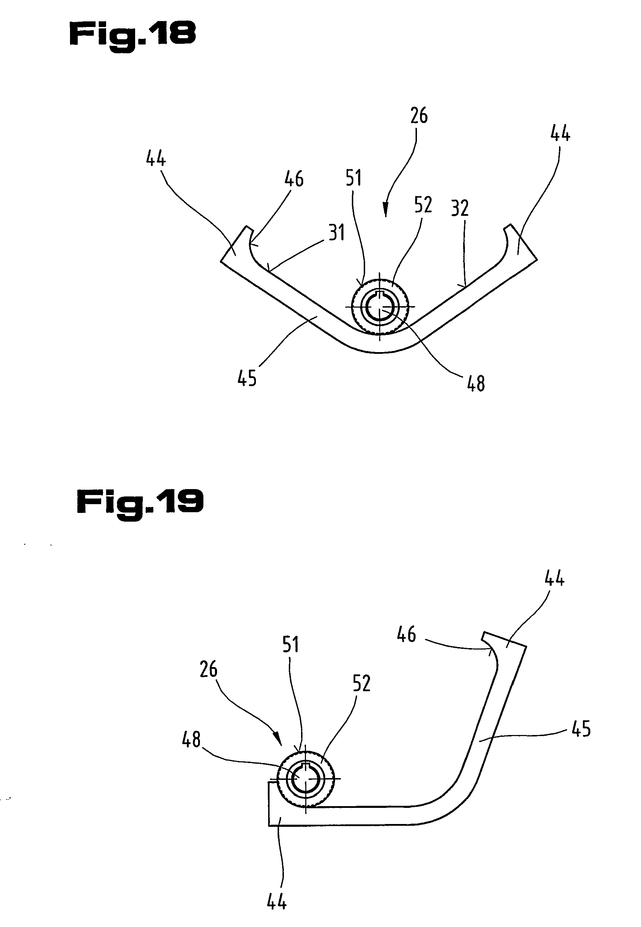

In den Fig. 14 bis 20 ist eine weitere mögliche und gegebenenfalls für sich eigenständige Ausbildung der Antriebsverbindung zwischen der Hubwippe 22 und dem Antriebselement 26 zur Bildung der Hubvorrichtung 20 gezeigt, wobei wiederum für gleiche Teile gleiche Bezugszeichen bzw. Bauteilbezeichnungen wie in den vorangegangenen Fig. 1 bis 13 verwendet werden. Um unnötige Wiederholungen zu vermeiden, wird auf die detaillierte Beschreibung in den vorangegangenen Fig. 1 bis 13 hingewiesen bzw. Bezug genommen.

Das Traggerüst zur Bildung der Hubwippe 22 kann analog jener Ausbildung entsprechen, wie dies bereits zuvor detailliert beschrieben worden ist.

Bei diesem hier gezeigten Ausführungsbeispiel ist die Antriebsverbindung zwischen dem Antriebselement 26 und der Hubwippe 22 durch eine Reibverbindung, wie beispielsweise ein Reibrad 49, mit einer Reibradschiene 50 gebildet. Dadurch, dass bei diesem Ausführungsbeispiel die Antriebsverbindung über Reibschluss erfolgt, kann die zuvor beschriebene Anordnung mit dem Abstützbereich 39 am Antriebselement 26 und der Stützfläche 40 an der Hubwippe 22 gegebenenfalls entfallen. Das Reibrad 49 des Antriebselements 26 stützt sich ausgehend von der Ruheposition bis kurz vor Erreichen der Halteposition an der Hubwippe 22, insbesondere der daran angeordneten Reibradschiene 50, ab.

Weiters umfasst bei diesem Ausführungsbeispiel das Antriebselement 26 an dessen Umfang einen Anschlagbereich 51, welcher nach Erreichen der Halteposition der Hubwippe 22 an dem an der Hubwippe 22 ausgebildeten Anschlagelement 44 abgestützt ist. Bei diesem gezeigten Ausführungsbeispiel ist der Anschlagbereich 51 des Antriebselements 26 durch ein eigenes Anschlagrad 52 gebildet, welches hier drehfest mit der Antriebswelle 48 verbunden ist. Zur Abstützung des Anschlagbereichs 51, insbesondere des Anschlagrades 52, sind wiederum an voneinander abgewendeten Enden der Teilabschnitte 31, 32 der Kulissenbahn 24 je ein Anschlagelement 44 angeordnet bzw. ausgebildet. Dabei können die Anschlagelemente 44 an der Tragschiene 45 gehaltert sein bzw. mit dieser einstückig ausgebildet sein und wiederum einen weiteren Bauteil der Hubwippe 22 ausbilden. Weiters entspricht ein Längsverlauf der Tragschiene 45, auf der der Achse 23 zugewendeten Seite in etwa jenem der Kulissenbahn 24. Dadurch ist eine gleichzeitige Anlage des Reibrades 49 als auch des Anschlagbereichs 51 an der Reibradschiene 50 bzw. der Tragschiene 45 gewährleistet. In der komplettierten Ausbildung sind die Tragschiene 45 und/oder die Reibradschiene 50 integraler Bestandteil der Hubwippe 22.

Wie aus einer Zusammenschau der Fig. 15, 17 und 19 zu ersehen ist, befmdet sich die Hubwippe 22 in der Halteposition für das Hubgestell 17, wobei hier wiederum das Antriebselement 26 mit dessen Anschlagbereich 51 am Anschlagelement 44 der Hubwippe abgestützt ist und das Reibrad 49 außer Eingriff mit der Reibradschiene 50 steht. Dadurch ist wiederum ein freies Drehen des Antriebselements 26 relativ gegenüber der Hubwippe 22 zwischen dem Anschlagbereich 51 des Antriebselements 26 und dem Anschlagelement 44 möglich, sodass die Hubwippe 22 und damit verbunden das Hubgestell 17 wiederum in der Betriebsstellung für das Transportmittel 19 gehalten wird.

Das oder die Anschlagelemente 44 bilden wiederum eine dem Anschlagbereich 51, insbesondere des Anschlagrades 52 des Antriebselements 26 zugewendeten Anschlagfläche 46 aus, welche in einem mit dem Antriebselement 26 zusammenwirkenden Abschnitt gegengleich zu dessen Anschlagbereich 51 ausgebildet ist. Zur Unterbindung der Antriebsverbindung zwischen dem Reibrad 49 und der Reibradschiene 50 endet die Reibradschiene 50 in ihrer Längserstreckung vor dem Anschlagelement 44 bzw. ist die Reibradschiene 50 gegenüber dem Reibrad 49 freigestellt. Dadurch kommt wiederum bei zusammenwirkendem Anschlagbereich 51 des Antriebselements 26 mit dem oder den Anschlagelementen 44 an der Hubwippe 22 das Reibrad 49 außer Antriebsverbindung mit der Reibradschiene 50. Das Reibrad 49 des Antriebselements 26 ist mit der Antriebswelle 48 drehfest verbunden, wobei die Antriebswelle 48 ihrerseits im Hubgestell 17 drehbar gelagert ist und weiters die Antriebswelle 48 mit der Antriebsvorrichtung 18 in Antriebsverbindung steht.

Das Anliegen des Anschlagbereiches 43 am Anschlagelement 44, insbesondere dessen Anschlagfläche 46 erfolgt dadurch, dass dies während der Drehung in Art eines Gleitlagers erfolgt. Dadurch sollen Materialien eingesetzt werden, welche einen geringen Reibungskoeffizienten aufweisen und/oder verschleißfest gegen Reibung sind.

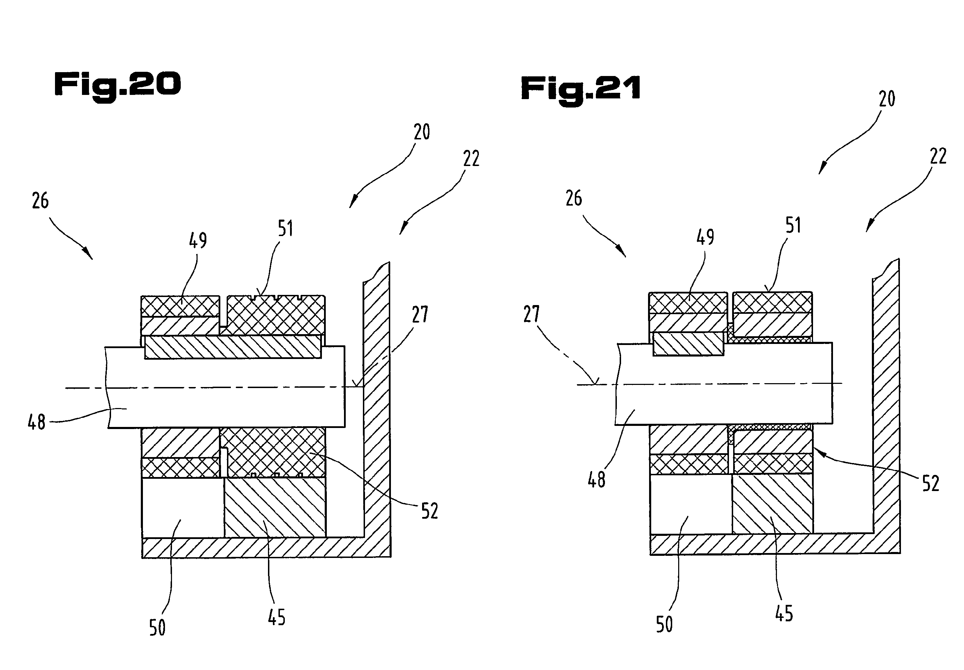

In der Fig. 21 ist eine weitere mögliche und gegebenenfalls für sich eigenständige Ausbildung des Antriebselements 26 gezeigt, wobei wiederum für gleiche Teile gleiche Bezugszeichen bzw. Bauteilbezeichnungen wie in den vorangegangenen Fig. 1 bis 20 verwendet werden. Gleichfalls wird, um unnötige Wiederholungen zu vermeiden, auf die detaillierte Beschreibung in den vorangegangenen Fig. 1 bis 20 hingewiesen bzw. Bezug genommen.

Im Gegensatz zu der Darstellung der Fig. 20 ist hier das Anschlagrad 52 zur Ausbildung des Anschlagbereiches 51 gegenüber dem Reibrad 49 bzw. der Antriebswelle 48 drehbar an dieser gelagert. Dadurch ist eine noch verschleißfreiere Abstützung des Antriebselements 26 in deren Halteposition am Anschlagelement 44 möglich. Unabhängig davon wäre es aber auch noch möglich, zwischen dem Anschlagrad 52 und der Antriebswelle 48 eine hier nicht näher dargestellte Freilaufvorrichtung anzuordnen.

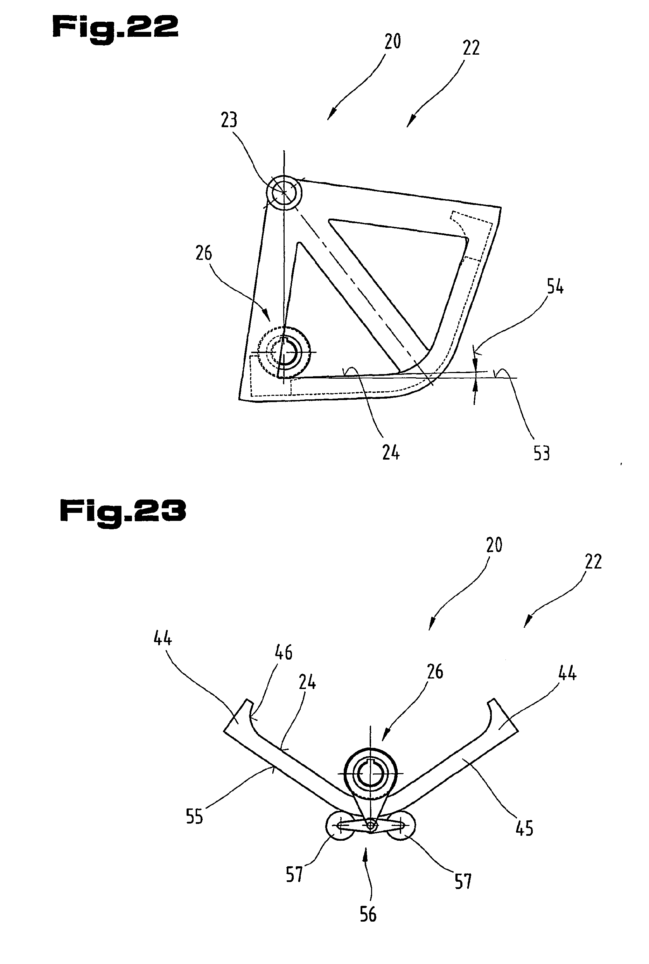

In der Fig. 22 ist eine Hubwippe 22 ähnlich jener Ausführungsform wie in den vorangegangenen Fig. 14 bis 19 gezeigt, wobei wiederum für gleiche Teile gleiche Bezugszeichen bzw. Bauteilbezeichnungen wie in den vorangegangenen Fig. 1 bis 21 verwendet werden. Gleichfalls wird, um unnötige Wiederholungen zu vermeiden, auf die detaillierte Beschreibung in den vorangegangenen Fig. 1 bis 21 hingewiesen bzw. Bezug genommen.

Im Gegensatz zu der in der Fig. 15 dargestellten Halteposition der Hubwippe 22 relativ gegenüber dem Grundgestell 15 ist die Kulissenbahn 24, ausgehend vom Antriebselement 26 gegenüber einer horizontal verlaufenden Ebene 53 um einen Winkel 54 ansteigend zu dieser ausgerichtet. Dieser Winkel 54 beträgt gegenüber der horizontalen Ebene 53 zwischen 0,5° und 7°, bevorzugt zwischen 1° und 3°, insbesondere 2°. Dadurch wird, gemäß dem Prinzip der schiefen Ebene, die Hubwippe 22 in einer stabilen Position in deren Halteposition relativ gegenüber dem Grundgestell 15 gehalten.

In der Fig. 23 ist eine zusätzliche Führung des Antriebselements 26 an einem Teilbereich der Hubwippe 22 der Hubvorrichtung 20 vereinfacht schematisch dargestellt. Gleichfalls werden wiederum für gleiche Teile gleiche Bezugszeichen bzw. Bauteilbezeichnungen wie in den vorangegangenen Fig. 1 bis 22 verwendet. Um unnötige Wiederholungen zu vermeiden, wird auf die detaillierte Beschreibung in den vorangegangenen Fig. 1 bis 22 hingewiesen bzw. Bezug genommen.

Ein Bauteil der Hubwippe 22, wie dieser bereits detailliert in den Fig. 14 bis 20 beschrieben worden ist, nämlich die Tragschiene 45, bildet hier an der Hubwippe 22 auf der von der Achse 23 abgewendeten Seite der Kulissenbahn 24 eine in etwa parallel zur Kulissenbahn 24 verlaufende Stützbahn 55 aus. Dem Antriebselement 26 der Hubwippe 22 ist weiters hier zumindest ein Andrückelement 56 zugeordnet, welches auf der Stützbahn 55 während der gesamten Schwenkbewegung der Hubwippe 22 daran abgestützt ist. Dadurch wird eine noch bessere Führung und Anlage des Antriebselements 26 auch für deren Momentübertragung an der Kulissenbahn 24 erzielt. Gleichfalls können dadurch kontrollierte Kraftübertragungen vom Antriebselement 26 hin auf die Kulissenbahn 24 erfolgen. Dabei kann das Andrückelement 56 durch zumindest eine, bevorzugt jedoch zwei oder mehrere Andrückrollen 57 gebildet sein.

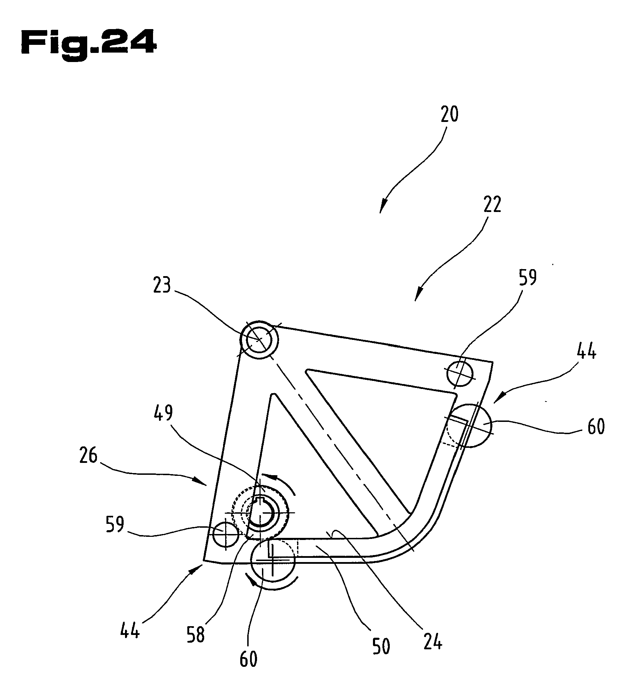

In der Fig. 24 ist eine weitere möglich und gegebenenfalls für sich eigenständige Ausbildung zur Abstützung und Positionierung der Hubwippe 22 in deren Halteposition gezeigt, wobei wiederum für gleiche Teile gleiche Bezugszeichen bzw. Bauteilbezeichnungen wie in den vorangegangnen Fig. 1 bis 23 verwendet werden. Um unnötige Wiederholungen zu vermeiden, wird auf die detaillierte Beschreibung in den vorangegangenen Fig. 1 bis 23 hingewiesen bzw. Bezug genommen.

Bei diesem hier gezeigten Ausführungsbeispiel ist die Antriebsverbindung zwischen dem Antriebselement 26 und der Hubwippe 22 durch einen auf Reibung basierenden Eingriff realisiert, wie dies bereits detailliert zuvor in den Fig. 14 bis 23 beschrieben worden ist.

Im Bereich des Antriebselements 26 ist ein Antriebsrad 58, insbesondere ein Reibrad 49, vorgesehen, wobei vor oder bei Erreichen der Halteposition der Hubwippe 22 das Antriebsrad 58 außer Antriebsverbindung mit der durch die Reibradschiene 50 gebildeten Kulissenbahn 24 steht. In dieser Halteposition sind dem Antriebsrad 58 als Anschlagelemente 44 an der Hubwippe 22 ein erstes sowie ein zweites Stützrad 59, 60 zugeordnet. Während der Verstellung ausgehend von der Ruheposition steht das Antriebsrad 58, insbesondere das Reibrad 49, mit der Reibradschiene 50 in Antriebsverbindung, wobei kurz vor Erreichen oder bei Erreichen der verschwenkten Halteposition der Hubwippe 22 das Antriebselement 26 mit den beiden Stützrädern 59, 60 in Berührung und damit zur Anlage kommt. Durch die beiden Stützräder und dem freigestellten Eingriff des Antriebsrades 58 gegenüber der Kulissenbahn 24, insbesondere der Reibradschiene 50, ist ein freies Drehen des Antriebselements 26 durch die Antriebsvorrichtung 18 möglich, ohne dass dabei eine Verlagerung der Hubwippe 22 erfolgt.

Das erste Stützrad 59 ist dabei in etwa im weiteren Längsverlauf der Kulissenbahn 24 distanziert zu dieser an der Hubwippe 22 drehbar gelagert. Das weitere Stützrad 60 ist in einem Endbereich der Kulissenbahn 24 an der Hubwippe 22 drehbar gelagert und derart angeordnet, dass das Antriebsrad 58 beim Eingriff mit dem zweiten Stützrad 60 außer Antriebsverbindung mit der Kulissenbahn 24, insbesondere der Reibradschiene 50, steht. Vorteilhaft ist es weiters, wenn dem weiteren Stützrad 60 eine nicht näher dargestellte Freilaufvonichtung zugeordnet ist, da so nach Erreichen der Halteposition ein ungehindertes Weiterdrehen in der gleichen Antriebsrichtung des Antriebselements 26 erfolgen kann. Wird die Drehrichtung der Antriebsvorrichtung 18 und damit des Antriebselements 26 geändert, wird über das nun durch die Freilaufvorrichtung blockierte Stützrad 60 das Antriebsrad 58 wiederum auf die Reibradschiene 50 zurückverbracht und es erfolgt eine kontrollierte Rückstellung der Hubwippe 22 in die Ruheposition.

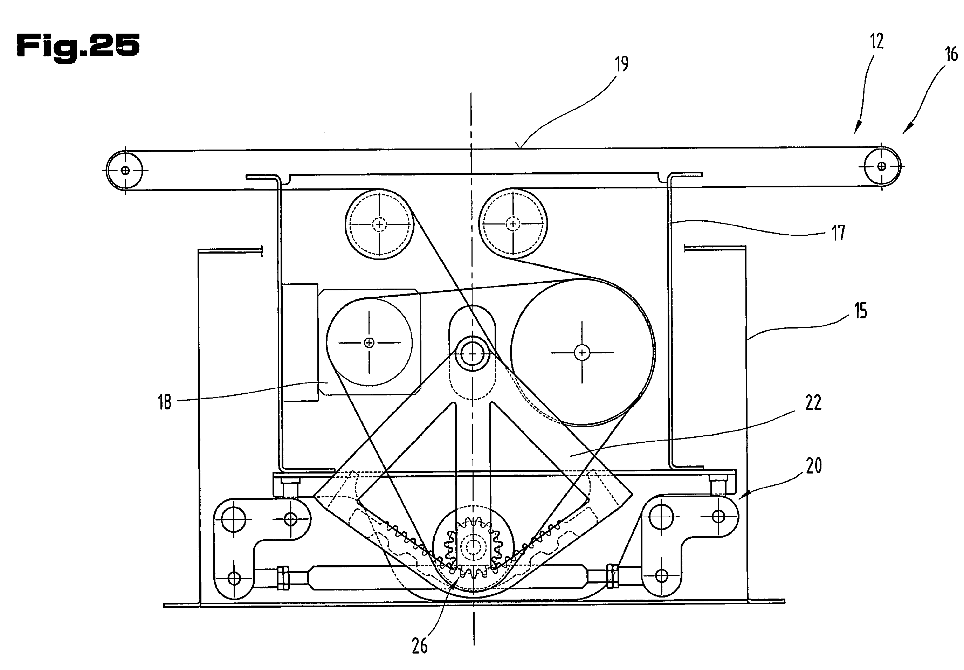

Anstelle der in der Fig. 2 und 3 gezeigten vertikal zur Umsetzebene 21 ausgerichteten Verstellrichtung des Hubgestells 17 relativ gegenüber dem Grundgestell 15 kann aber auch jede beliebige andere Relativführung des Hubgestells 17 gegenüber dem Grundgestell 15 Verwendung finden. Eine dieser Möglichkeiten ist in der Fig. 25 schematisch angedeutet, wobei dies über eine über Kniehebel im Grundgestell 15 und mit dem Hubgestell 17 in Verbindung stehende Anordnung erfolgen kann. Bei dieser Ausführungsform wird zusätzlich zur Vertikalverstellung auch eine geringfügige Querverstellung gegenüber der Vertikalen bewirkt. Dies ist jedoch bei derartigen Anlagen und der dabei benötigten geringen Hubhöhe zwischen der Bereitschaftsstellung und der Betriebsstellung von untergeordneter Bedeutung. Diese Hubhöhe beträgt z.B. in bekannter Weise zwischen 1 mm und 50 mm.

Die Ausführungsbeispiele zeigen mögliche Ausführungsvarianten der Umsetzeinrichtung, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend darauf hingewiesen, dass zum besseren Verständnis des Aufbaus der Umsetzeinrichtung 12, insbesondere deren Hubvorrichtung 20 diese bzw. deren Bestandteile teilweise unmaßstäblich und/oder vergrößert und/oder verkleinert dargestellt wurden.

Die den eigenständigen erfinderischen Lösungen zugrunde liegende Aufgabe kann der Beschreibung entnommen werden.

Vor allem können die einzelnen in den Fig. 1; 2 bis 13; 14 bis 20; 21; 22; 23; 24; 25 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Transportanlage
- 2: Fördergut
- 3: Förderbahn
- 4: Förderbahn
- 5: Förderbahn

- 6: Steuerungssystem
- 7: Steuervorrichtung
- 8: Datenbus
- 9: Datennetzwerk
- 10: Materialflussrechner

- 11: Hostrechner
- 12: Umsetzeinrichtung
- 13: Transportrolle
- 14: Förderebene
- 15: Grundgestell

- 16: Umsetzvorrichtung
- 17: Hubgestell
- 18: Antriebsvorrichtung
- 19: Transportmittel
- 20: Hubvorrichtung

- 21: Umsetzebene
- 22: Hubwippe
- 23: Schwenkachse
- 24: Kulissenbahn
- 25: Abstand

- 26: Antriebselement
- 27: Drehachse
- 28: Ebene
- 29: Radius
- 30: Distanz

- 31: Teilabschnitt
- 32: Teilabschnitt
- 33: Übergangsbereich
- 34: Zahnrad
- 35: Zahnleiste

- 36: Abstand
- 37: Abstand
- 38: Verstellweg
- 39: Abstützbereich
- 40: Stützfläche

- 41: Stützrad
- 42: Stützschiene
- 43: Anschlagbereich
- 44: Anschlagelement
- 45: Tragschiene

- 46: Anschlagfläche
- 47: Grundkörper
- 48: Antriebswelle
- 49: Reibrad
- 50: Reibradschiene

- 51: Anschlagbereich
- 52: Anschlagrad
- 53: Ebene
- 54: Winkel
- 55: Stützbahn

- 56: Andrückelement
- 57: Andrückrolle
- 58: Antriebsrad
- 59: Stützrad
- 60: Stützrad

## Patentansprüche

1. Umsetzeinrichtung (12) für eine zumindest eine Förderbahn (3, 4, 5) aufweisende Transportanlage (1), insbesondere zum Ein- und/oder Ausschleusen von zu transportierendem Fördergut (2), mit einem Grundgestell (15), mit einer Umsetzvorrichtung (16) umfassend ein Hubgestell (17), eine Antriebsvorrichtung (18) sowie zumindest ein Transportmittel (19), welches eine Umsetzebene (21) ausbildet, und mindestens eine Hubvorrichtung (20), mit welcher das Hubgestell (17) und damit die durch das Transportmittel (19) gebildete Umsetzebene (21) reversibel aus einer unterhalb einer Förderebene (14) der Transportanlage (1) befindlichen Bereitschaftsstellung in eine oberhalb der Förderebene (14) liegende Betriebsstellung verstellbar ist, und die eine Antriebsvorrichtung (18) sowohl mit dem Transportmittel (19) als auch mit der Hubvorrichtung (20) antriebsverbunden ist, **dadurch gekennzeichnet, dass** die Antriebsvorrichtung (18) am Hubgestell (17) gehaltert ist und die Hubvorrichtung (20) eine Hubwippe (22) umfasst, die am Grundgestell (15) gegenüber einer Achse (23) reversibel von einer Ruheposition in eine Halteposition verstellbar gelagert ist und bei in der Ruheposition befindlicher Hubwippe (22) das Hubgestell (17) mit dem Transportmittel (19) in der Bereitschaftsstellung und bei in der Halteposition befindlicher Hubwippe (22) das Hubgestell (17) mit dem Transportmittel (19) in der Betriebsstellung angeordnet ist, wobei die Hubwippe (22) zumindest eine Kulissenbahn (24) aufweist, welche in senkrechter Richtung zur Achse (23) in einem unterschiedlichen Abstand (25) zu dieser angeordnet ist, und dass ein Antriebselement (26) der Antriebsvorrichtung (18) mit der Kulissenbahn (24) der Hubwippe (22) ausgehend von deren Ruheposition bis hin zum Erreichen der Halteposition in Antriebsverbindung steht und nach dem Erreichen der Halteposition das Antriebselement (26) außer Antriebsverbindung mit der Kulissenbahn (24) steht, oder dass das Antriebselement (26) der Antriebsvorrichtung (18) stets mit der Kulissenbahn (24) der Hubwippe (22) in Antriebsverbindung steht und nach dem Erreichen der Halteposition die Antriebverbindung zwischen dem Antriebselement (26) und der Antriebsvorrichtung (18) unterbrochen ist.

2. Umsetzeinrichtung (12) nach Anspruch 1, **dadurch gekennzeichnet, dass** das Antriebselement (26) der Hubvorrichtung (20) zugeordnet, am Hubgestell (17) gehaltert sowie um eine parallel zur Achse (23) ausgerichtete Drehachse (27) drehbar ist.

3. Umsetzeinrichtung (12) nach Anspruch 1 oder 2, **dadurch gekennzeichnet, dass** die Achse (23) der Hubwippe (22) in senkrechter Richtung zu einer Transportrichtung des Transportmittels (19) ausgerichtet ist.

4. Umsetzeinrichtung (12) nach einem der vorhergehenden Ansprüche, **dadurch gekennzeichnet, dass** die Kulissenbahn (24) der Hubwippe (22) in Richtung deren Achse (23) gesehen V-förmig ausgebildet ist.

5. Umsetzeinrichtung (12) nach einem der vorhergehenden Ansprüche, **dadurch gekennzeichnet, dass** die Kulissenbahn (24) der Hubwippe (22) an einem der Achse (23) zugewendeten Abschnitt angeordnet ist.

6. Umsetzeinrichtung (12) nach einem der vorhergehenden Ansprüche, **dadurch gekennzeichnet, dass** in der Ruheposition der Hubwippe (22) der Abstand (25) der Kulissenbahn (24) zur Achse (23) der Hubwippe (22) in einer vertikal durch die Achse (23) verlaufenden Ebene (28) ein Maximum beträgt.

7. Umsetzeinrichtung (12) nach einem der vorhergehenden Ansprüche, **dadurch gekennzeichnet, dass** in der Ruheposition der Hubwippe (22) der Abstand (25) der Kulissenbahn (24) zur Achse (23) der Hubwippe (22) mit zunehmender Distanz (30) zur vertikal durch die Achse (23) verlaufenden Ebene (28) gegenüber dem maximalen Abstand (25) kleiner ausgebildet ist.

8. Umsetzeinrichtung (12) nach einem der vorhergehenden Ansprüche, **dadurch gekennzeichnet, dass** die Kulissenbahn (24) Teilabschnitte (31, 32) aufweist, welche ausgehend von deren maximalen Abstand (25) zur Achse (23) jeweils geradlinig verlaufend ausgebildet sind.

9. Umsetzeinrichtung (12) nach Anspruch 8, **dadurch gekennzeichnet, dass** zwischen den Teilabschnitten (31, 32) der Kulissenbahn (24) im Bereich von deren maximalen Abstand (25) zur Achse (23) ein konkav ausgebildeter Übergangsbereich (33) angeordnet ist.

10. Umsetzeinrichtung (12) nach einem der vorhergehenden Ansprüche, **dadurch gekennzeichnet, dass** in der Ruheposition der Hubwippe (22) die Kulissenbahn (24) symmetrisch zur vertikal durch die Achse (23) verlaufenden Ebene (28) ausgebildet ist.

11. Umsetzeinrichtung (12) nach einem der vorhergehenden Ansprüche, **dadurch gekennzeichnet, dass** in der Ruheposition der Hubwippe (22) die Drehachse (27) des Antriebselements (26) in senkrechter Richtung unterhalb der Achse (23) der Hubwippe (22) angeordnet ist.

12. Umsetzeinrichtung (12) nach einem der vorhergehenden Ansprüche, **dadurch gekennzeichnet, dass** in der Halteposition der Hubwippe (22) die Drehachse (27) des Antriebselements (26) in senkrechter Richtung unterhalb der Achse (23) der Hubwippe (22) angeordnet ist.

13. Umsetzeinrichtung (12) nach einem der vorhergehenden Ansprüche, **dadurch gekennzeichnet, dass** bei in der Halteposition befindlicher Hubwippe die Kulissenbahn (24) ausgehend vom Antriebselement (26) gegenüber einer horizontal verlaufenden Ebene (53) um einen Winkel (54) ansteigend zu dieser ausgerichtet ist.

14. Umsetzeinrichtung (12) nach Anspruch 13, **dadurch gekennzeichnet, dass** der Winkel (54) zwischen 0,5° und 7°, bevorzugt zwischen 1° und 3°, insbesondere 2° beträgt.

15. Umsetzeinrichtung (12) nach einem der vorhergehenden Ansprüche, **dadurch gekennzeichnet, dass** die Antriebsverbindung zwischen dem Antriebselement (26) und der Hubwippe (22) durch eine miteinander in Eingriff stehende Zahnverbindung, wie beispielsweise ein Zahnrad (34) mit einer Zahnleiste (35), gebildet ist.

16. Umsetzeinrichtung (12) nach Anspruch 15, **dadurch gekennzeichnet, dass** die Zahnleiste (35) einen Teilbereich der Kulissenbahn (24) ausbildet.

17. Umsetzeinrichtung (12) nach einem der vorhergehenden Ansprüche, **dadurch gekennzeichnet, dass** das Antriebselement (26) an dessen Umfang weiters einen Abstützbereich (39) umfasst, welcher an einer an der Hubwippe (22) ausgebildeten Stützfläche (40) abgestützt ist.

18. Umsetzeinrichtung (12) nach Anspruch 17, **dadurch gekennzeichnet, dass** der Abstützbereich (39) am Antriebselement (26) durch ein Stützrad (41) gebildet ist.

19. Umsetzeinrichtung (12) nach Anspruch 17, **dadurch gekennzeichnet, dass** die Stützfläche (40) an einer Stützschiene (42) ausgebildet ist, welche einen Bauteil der Hubwippe (22) bildet.

20. Umsetzeinrichtung (12) nach Anspruch 17 oder 19, **dadurch gekennzeichnet, dass** die Stützfläche (40) der Stützschiene (42) in ihrem Längsverlauf an einen Längsverlauf der Zahnleiste (35) angepasst ist.

21. Umsetzeinrichtung (12) nach einem der vorhergehenden Ansprüche, **dadurch gekennzeichnet, dass** das Antriebselement (26) an dessen Umfang weiters einen Anschlagbereich (43) umfasst, welcher nach Erreichen der Halteposition der Hubwippe (22) an einem an der Hubwippe (22) ausgebildeten Anschlagelement (44) abgestützt ist.

22. Umsetzeinrichtung (12) nach Anspruch 21, **dadurch gekennzeichnet, dass** an voneinander abgewendeten Enden der Teilabschnitte (31, 32) der Kulissenbahn (24) je ein Anschlagelement (44) angeordnet ist.

23. Umsetzeinrichtung (12) nach Anspruch 21 oder 22, **dadurch gekennzeichnet, dass** die Anschlagelemente (44) an einer Tragschiene (45) gehaltert sind, und diese einen weiteren Bauteil der Hubwippe (22) bilden.

24. Umsetzeinrichtung (12) nach Anspruch 23, **dadurch gekennzeichnet, dass** ein Längsverlauf der Tragschiene (45) auf der der Achse (23) zugewendeten Seite in etwa jenem der Kulissenbahn (24) entspricht.

25. Umsetzeinrichtung (12) nach einem der vorhergehenden Ansprüche, **dadurch gekennzeichnet, dass** das Anschlagelement (44) eine dem Anschlagbereich (43) des Antriebselements (26) zugewendete Anschlagfläche (46) ausbildet, welche in einem mit dem Antriebselement (26) zusammenwirkenden Abschnitt gegengleich zu dessen Anschlagbereich (43) ausgebildet ist.

26. Umsetzeinrichtung (12) nach einem der vorhergehenden Ansprüche, **dadurch gekennzeichnet, dass** die Zahnleiste (35) in ihrer Längserstreckung vor dem Anschlagelement (44) endet.

27. Umsetzeinrichtung (12) nach einem der vorhergehenden Ansprüche, **dadurch gekennzeichnet, dass** bei zusammenwirkendem Anschlagbereich (43) des Antriebselements (26) mit dem Anschlagelement (44) der Hubwippe (22) das Zahnrad (34) außer Antriebsverbindung mit der Zahnleiste (35) steht.

28. Umsetzeinrichtung (12) nach einem der vorhergehenden Ansprüche, **dadurch gekennzeichnet, dass** das Antriebselement (26) weiters einen Grundkörper (47) umfasst.

29. Umsetzeinrichtung (12) nach einem der vorhergehenden Ansprüche, **dadurch gekennzeichnet, dass** am Grundkörper (47) das Zahnrad (34) und das Stützrad (41) gehaltert sind.

30. Umsetzeinrichtung (12) nach einem der vorhergehenden Ansprüche, **dadurch gekennzeichnet, dass** das Zahnrad (34), der Abstützbereich (39) und der Anschlagbereich (43) unmittelbar nebeneinander in Richtung der Drehachse (27) angeordnet sind.

31. Umsetzeinrichtung (12) nach einem der vorhergehenden Ansprüche, **dadurch gekennzeichnet, dass** der Grundkörper (47) des Antriebselements (26) mit einer Antriebswelle (48) drehfest verbunden ist, wobei die Antriebswelle (48) im Hubgestell (17) drehbar gelagert ist und die Antriebswelle (48) mit der Antriebsvorrichtung (18) in Antriebsverbindung steht.

32. Umsetzeinrichtung (12) nach einem der Ansprüche 1 bis 14, **dadurch gekennzeichnet, dass** die Antriebsverbindung zwischen dem Antriebselement (26) und der Hubwippe (22) durch eine Reibverbindung, wie ein Reibrad (49) mit einer Reibradschiene (50), gebildet ist.

33. Umsetzeinrichtung (12) nach Anspruch 32, **dadurch gekennzeichnet, dass** das Antriebselement (26) an dessen Umfang weiters einen Anschlagbereich (51) umfasst, welcher nach Erreichen der Halteposition der Hubwippe (22) an einem an der Hubwippe (22) ausgebildeten Anschlagelement (44) abgestützt ist.

34. Umsetzeinrichtung (12) nach Anspruch 32 oder 33, **dadurch gekennzeichnet, dass** der Anschlagbereich (51) des Antriebselements (26) durch ein Anschlagrad (52) gebildet ist.

35. Umsetzeinrichtung (12) nach Anspruch 34, **dadurch gekennzeichnet, dass** das Anschlagrad (52) gegenüber dem Reibrad (49) drehbar an einer Antriebswelle (48) gelagert ist.

36. Umsetzeinrichtung (12) nach einem der Ansprüche 32 bis 35, **dadurch gekennzeichnet, dass** zwischen dem Anschlagrad (52) und der Antriebswelle (48) eine Freilaufvorrichtung angeordnet ist.

37. Umsetzeinrichtung (12) nach einem der Ansprüche 32 bis 35, **dadurch gekennzeichnet, dass** das Anschlagrad (52) drehfest mit der Antriebswelle (48) verbunden ist.

38. Umsetzeinrichtung (12) nach einem der Ansprüche 32 bis 37, **dadurch gekennzeichnet, dass** an voneinander abgewendeten Enden der Teilabschnitte (31, 32) der Kulissenbahn (24) je ein Anschlagelement (44) angeordnet ist.

39. Umsetzeinrichtung (12) nach einem der Ansprüche 32 bis 38, **dadurch gekennzeichnet, dass** die Anschlagelemente (44) an einer Tragschiene (45) gehaltert sind, und diese einen weiteren Bauteil der Hubwippe (22) bilden.

40. Umsetzeinrichtung (12) nach Anspruch 39, **dadurch gekennzeichnet, dass** ein Längsverlauf der Tragschiene (45) auf der der Achse (23) zugewendeten Seite in etwa jenem der Kulissenbahn (24) entspricht.

41. Umsetzeinrichtung (12) nach einem der Ansprüche 32 bis 40, **dadurch gekennzeichnet, dass** das Anschlagelement (44) eine dem Anschlagbereich (51) des Antriebselements (26) zugewendete Anschlagfläche (46) ausbildet, welche in einem mit dem Antriebselement (26) zusammenwirkenden Abschnitt gegengleich zu dessen Anschlagbereich (51) ausgebildet ist.

42. Umsetzeinrichtung (12) nach einem der Ansprüche 32 bis 41, **dadurch gekennzeichnet, dass** die Reibradschiene (50) in ihrer Längserstreckung vor dem Anschlagelement (44) endet.

43. Umsetzeinrichtung (12) nach einem der Ansprüche 32 bis 42, **dadurch gekennzeichnet, dass** bei zusammenwirkendem Anschlagbereich (51) des Antriebselements (26) mit dem Anschlagelement (44) der Hubwippe (22) das Reibrad (49) außer Antriebsverbindung mit der Reibradschiene (50) steht.

44. Umsetzeinrichtung (12) nach einem der Ansprüche 32 bis 43, **dadurch gekennzeichnet, dass** das Reibrad (49) des Antriebselements (26) mit der Antriebswelle (48) drehfest verbunden ist, wobei die Antriebswelle (48) im Hubgestell (17) drehbar gelagert ist und die Antriebswelle (48) mit der Antriebsvorrichtung (18) in Antriebsverbindung steht.

45. Umsetzeinrichtung (12) nach einem der Ansprüche 32 bis 44, **dadurch gekennzeichnet, dass** an der Hubwippe (22) auf der von der Achse (23) abgewendeten Seite der Kulissenbahn (24) eine in etwa parallel zur Kulissenbahn (24) verlaufende Stützbahn (55) ausgebildet ist und dem Antriebselement (26) der Hubwippe (22) zumindest ein Andrückelement (56) zugeordnet ist, welches auf der Stützbahn (55) abgestützt ist.

46. Umsetzeinrichtung (12) nach Anspruch 45, **dadurch gekennzeichnet, dass** das Andrückelement (56) durch zumindest eine Andrückrolle (57) gebildet ist.

47. Umsetzeinrichtung (12) nach einem der Ansprüche 32 bis 46, **dadurch gekennzeichnet, dass** das Antriebselement (26) ein Antriebsrad (58), insbesondere ein Reibrad (49), umfasst und nach dem Erreichen der Halteposition der Hubwippe (22) das Antriebsrad (58) außer Antriebsverbindung mit der durch die Reibradschiene (50) gebildeten Kulissenbahn (24) steht, wobei in dieser Halteposition dem Antriebsrad (58) als Anschlagelemente (44) an der Hubwippe (22) ein erstes sowie ein zweites Stützrad (59, 60) zugeordnet sind.

48. Umsetzeinrichtung (12) nach Anspruch 47, **dadurch gekennzeichnet, dass** das erste Stützrad (59) im weiteren Längsverlauf (24) der Kulissenbahn distanziert zu dieser angeordnet und an der Hubwippe (22) drehbar gelagert ist.

49. Umsetzeinrichtung (12) nach Anspruch 47 oder 48, **dadurch gekennzeichnet, dass** das weitere Stützrad (60) in einem Endbereich der Kulissenbahn (24) an der Hubwippe (22) drehbar gelagert und derart angeordnet ist, dass das Antriebsrad (58) beim Eingriff mit dem zweiten Stützrad (60) außer Antriebsverbindung mit der Kulissenbahn (24), insbesondere der Reibradschiene (50) steht.

50. Umsetzeinrichtung (12) nach einem der Ansprüche 47 bis 49, **dadurch gekennzeichnet, dass** dem weiteren Stützrad (60) eine Freilaufvorrichtung zugeordnet ist.

51. Umsetzeinrichtung (12) nach einem der vorhergehenden Ansprüche, **dadurch gekennzeichnet, dass** bei zusammenwirkendem Anschlagbereich (43) des Antriebselements (26) mit dem Anschlagelement (44) die Hubwippe (22) in der Halteposition gehalten ist und das Transportmittel (19) weiters in der gleichen Drehrichtung durch die gemeinsame Antriebsvorrichtung (18) angetrieben ist.

52. Umsetzeinrichtung (12) nach einem der vorhergehenden Ansprüche, **dadurch gekennzeichnet, dass** das Hubgestell (17) relativ gegenüber dem Grundgestell (15) zumindest annähernd in einer vertikal zur Umsetzebene (21) ausgerichteten Richtung verstellbar geführt ist.

## Claims

1. Transfer system (12) for at least one conveyor track (3, 4, 5) having a transport system (1), in particular for gating in and/or gating out objects (2) to be conveyed, with a base frame (15), with a transfer device (16) comprising a lifting frame (17), a drive mechanism (18) and at least one conveyor means (19) which forms a transfer plane (21), and at least one lifting mechanism (20) by means of which the lifting frame (17) and hence the transfer plane (21) formed by the conveyor means (19) can be reversibly moved from a stand-by position disposed underneath a conveyor plane (14) of the transport system (1) into an operating position lying above the conveyor plane (14), and the drive mechanism (18) is drivingly connected to both the conveyor means (19) and the lifting mechanism (20), **characterised in that** the drive mechanism (18) is retained on the lifting frame (17), and the lifting mechanism (20) comprises a lifting rocker (22) which is mounted on the base frame (15) so that it can be reversibly displaced relative to an axis (23) from a non-operating position into a retaining position, and when the lifting rocker (22) is in the non-operating position the lifting frame (17) is disposed with the conveyor means (19) in the stand-by position and when the lifting rocker (22) is in the retaining position, the lifting frame (17) with the conveyor means (19) is disposed in the operating position, and the lifting rocker (22) has at least one rocker track (24) which is disposed at a different distance (25) from it in the direction perpendicular to the axis (23), and a drive element (26) of the drive mechanism (18) is drivingly connected to the rocker track (24) of the lifting rocker (22) from its non-operating position until reaching the retaining position, and on reaching the retaining position, the drive element (26) is disconnected from the driving connection to the rocker track (24) or the drive element (26) of the drive mechanism (18) is always drivingly connected to the rocker track (24) of the lifting rocker (22) and the drive connection between the drive element (26) and the drive mechanism (18) is interrupted on reaching the retaining position.

2. Transfer system (12) as claimed in claim 1, **characterised in that** the drive element (26) co-operates with the lifting mechanism (20), is retained on the lifting frame (17) and is rotatable about an axis of rotation (27) oriented parallel with the axis (23).

3. Transfer system (12) as claimed in claim 1 or 2, **characterised in that** the axis (23) of the lifting rocker (22) is oriented in a direction perpendicular to a conveying direction of the conveyor means (19).

4. Transfer system (12) as claimed in one of the preceding claims, **characterised in that** the rocker track (24) of the lifting rocker (22) is V-shaped as viewed in the direction of its axis (23).

5. Transfer system (12) as claimed in one of the preceding claims, **characterised in that** the rocker track (24) of the lifting rocker (22) is disposed on a portion directed towards the axis (23).

6. Transfer system (12) as claimed in one of the preceding claims, **characterised in that** when the lifting rocker (22) is in the non-operating position, the distance (25) of the rocker track (24) from the axis (23) of the lifting rocker (22) is at a maximum in a plane (28) extending vertically through the axis (23).

7. Transfer system (12) as claimed in one of the preceding claims, **characterised in that** when the lifting rocker (22) is in the non-operating position, the distance (25) of the rocker track (24) from the axis (23) of the lifting rocker (22) becomes shorter than the maximum distance (25) as the distance (30) from the plane (28) extending vertically through the axis (23) increases.

8. Transfer system (12) as claimed in one of the preceding claims, **characterised in that** the rocker track (24) has part-portions (31, 32) which respectively extend in a straight line starting from their maximum (25) distance from the axis (23).

9. Transfer system (12) as claimed in claim 8, **characterised in that** a concave transition region (33) is disposed between the part-portions (31, 32) of the rocker track (24) in the region of its maximum distance (25) from the axis (23).

10. Transfer system (12) as claimed in one of the preceding claims, **characterised in that** when the lifting rocker (22) is in the non-operating position, the rocker track (24) is disposed symmetrically with respect to the plane (28) extending vertically through the axis (23).

11. Transfer system (12) as claimed in one of the preceding claims, **characterised in that** when the lifting rocker (22) is in the non-operating position, the axis of rotation (27) of the drive element (26) is disposed underneath the axis (23) of the lifting rocker (22) in the vertical direction.

12. Transfer system (12) as claimed in one of the preceding claims, **characterised in that** when the lifting rocker (22) is in the retaining position, the axis of rotation (27) of the drive element (26) is disposed underneath the axis (23) of the lifting rocker (22) in the vertical direction.

13. Transfer system (12) as claimed in one of the preceding claims, **characterised in that** the when the lifting rocker is in the retaining position, the rocker track (24) is oriented at an angle (54) with respect to a horizontally extending plane (53), rising with respect to it starting from the drive element (26).

14. Transfer system (12) as claimed in claim 13, **characterised in that** the angle (54) is between 0.5° and 7°, preferably between 1° and 3°, in particular is 2°.

15. Transfer system (12) as claimed in one of the preceding claims, **characterised in that** the drive connection between the drive element (26) and the lifting rocker (22) is provided in the form of a mutually engaging toothed connection, such as a gear (34) with a toothed rack (35).

16. Transfer system (12) as claimed in claim 15, **characterised in that** the toothed rack (35) constitutes a part-region of the rocker track (24).

17. Transfer system (12) as claimed in one of the preceding claims, **characterised in that** the drive element (26) also has a support region (39) on its circumference, which is supported on a support surface (40) on the lifting rocker (22).

18. Transfer system (12) as claimed in claim 17, **characterised in that** the support region (39) on the drive element (26) is provided in the form of a stabilising wheel (41).

19. Transfer system (12) as claimed in claim 17, **characterised in that** the stabilising surface (40) is disposed on a stabilising rail (42) forming part of the lifting rocker (22).

20. Transfer system (12) as claimed in claim 17 or 19, **characterised in that** the stabilising surface (40) of the stabilising rail (42) is adapted in terms of its longitudinal extension to a longitudinal extension of the toothed rack (35).

21. Transfer system (12) as claimed in one of the preceding claims, **characterised in that** the drive element (26) also has a contact region (43) on its circumference which is supported on a contact element (44) disposed on the lifting rocker (22) when the lifting rocker (22) reaches the retaining position.

22. Transfer system (12) as claimed in claim 21, **characterised in that** a stop element (44) is disposed respectively on mutually remote ends of the part-portions (31, 32) of the rocker track (24).

23. Transfer system (12) as claimed in claim 21 or 22, **characterised in that** the stop elements (44) are retained on a support rail (45) and form another part of the lifting rocker (22).

24. Transfer system (12) as claimed in claim 23, **characterised in that** a longitudinal extension of the support rail (45) on the side directed towards the axis (23) approximately corresponds to that of the rocker track (24).

25. Transfer system (12) as claimed in one of the preceding claims, **characterised in that** the stop element (44) is disposed on a stop surface (46) directed towards the stop region (43) of the drive element (26), which is disposed in a portion co-operating with the drive element (26) complementing its stop region (43).

26. Transfer system (12) as claimed in one of the preceding claims, **characterised in that** the toothed rack (35) terminates before the stop element (44) in its longitudinal extension.

27. Transfer system (12) as claimed in one of the preceding claims, **characterised in that** when the stop region (43) of the drive element (26) is co-operating with the stop element (44) of the lifting rocker (22), the gear (34) is disengaged from the drive connection to the toothed rack (35).

28. Transfer system (12) as claimed in one of the preceding claims, **characterised in that** the drive element (26) also has a main body (47).

29. Transfer system (12) as claimed in one of the preceding claims, **characterised in that** the gear (34) and the stabilising wheel (41) are retained on the main body (47).

30. Transfer system (12) as claimed in one of the preceding claims, **characterised in that** the gear (34), support region (39) and stop region (43) are disposed immediately adjacent to one another in the direction of the axis of rotation (27).

31. Transfer system (12) as claimed in one of the preceding claims, **characterised in that** the main body (47) of the drive element (26) is connected so as to rotate in unison with a drive shaft (48) and the drive shaft (48) is rotatably mounted in the lifting frame (17), and the drive shaft (48) is in a driving connection with the drive mechanism (18).

32. Transfer system (12) as claimed in one of claims 1 to 14, **characterised in that** the drive connection between the drive element (26) and the lifting rocker (22) is provided in the form of a friction connection, such as a friction wheel (49) with a friction wheel rail (50).

33. Transfer system (12) as claimed in claim 32, **characterised in that** the drive element (26) also has a stop region (51) on its circumference, which is supported on a stop element (44) disposed on the lifting rocker (22), when the lifting rocker (22) reaches the retaining position.

34. Transfer system (12) as claimed in claim 32 or 33, **characterised in that** the stop region (51) of the drive element (26) is provided in the form of a stop wheel (52).

35. Transfer system (12) as claimed in claim 34, **characterised in that** the stop wheel (52) is mounted on a drive shaft (48) so that it is rotatable relative to the friction wheel (49).

36. Transfer system (12) as claimed in one of claims 32 to 35, **characterised in that** a freewheel device is disposed between the stop wheel (52) and the drive shaft (48).

37. Transfer system (12) as claimed in one of claims 32 to 35, **characterised in that** the stop wheel (52) is connected to the drive shaft (48) so as to rotate in unison with it.

38. Transfer system (12) as claimed in one of claims 32 to 37, **characterised in that** a stop element (44) is disposed respectively on mutually remote ends of the part-portions (31, 32) of the rocker track (24).

39. Transfer system (12) as claimed in one of claims 32 to 38, **characterised in that** the stop elements (44) are retained on a support rail (45) and form another part of the lifting rocker (22).

40. Transfer system (12) as claimed in claim 39, **characterised in that** a longitudinal extension of the support rail (45) on the side directed towards the axis (23) approximately corresponds to that of the rocker track (24).

41. Transfer system (12) as claimed in one of claims 32 to 40, **characterised in that** the stop element (44) forms a stop surface (46) directed towards the stop region (51) of the drive element (26) which, in a portion co-operating with the drive element (26), complements its stop region (51).

42. Transfer system (12) as claimed in one of claims 32 to 41, **characterised in that** the friction wheel rail (50) terminates before the stop element (44) in its longitudinal extension.

43. Transfer system (12) as claimed in one of claims 32 to 42, **characterised in that** when the stop region (51) of the drive element (26) is co-operating with the stop element (44) of the lifting rocker (22), the friction wheel (49) is disconnected from the drive connection to the friction wheel rail (50).

44. Transfer system (12) as claimed in one of claims 32 to 43, **characterised in that** the friction wheel (49) of the drive element (26) is connected to the drive shaft (48) so as to rotate in unison with it, and the drive shaft (48) is mounted so as to be rotatable in the lifting frame (17) and the drive shaft (48) is drivingly connected to the drive mechanism (18).

45. Transfer system (12) as claimed in one of claims 32 to 44, **characterised in that** a support track (55) is provided on the lifting rocker (22) on the side of the rocker track (24) remote from the axis (23) and extending approximately parallel wit h the rocker track (24), and at least one pressing element (56) supported o the support track (55) co-operates with the drive element (26) of the lifting rocker (22).

46. Transfer system (12) as claimed in claim 45, **characterised in that** the pressing element (56) is provided in the form of at least one pressing roller (57).

47. Transfer system (12) as claimed in one of claims 32 to 46, **characterised in that** the drive element (26) comprises a driving wheel (58), in particular a friction wheel (49), and when the lifting rocker (22) has reached the retaining position, the driving wheel (58) is disconnected from the drive connection to the rocker track (24) formed by the friction wheel rail (50), and a first and a second stabilising wheel (59, 60) co-operates with the driving wheel (58) in this retaining position, acting as stop elements (44) on the lifting rocker (22).

48. Transfer system (12) as claimed in claim 47, **characterised in that** the first stabilising wheel (59) is disposed at a distance apart from the rocker track (24) in the rest of its longitudinal extension and is rotatably mounted on the lifting rocker (22).

49. Transfer system (12) as claimed in claim 47 or 48, **characterised in that** the other stabilising wheel (60) is rotatably mounted on the lifting rocker (22) in an end region of the rocker track (24) and is disposed so that the driving wheel (58) is disengaged from the drive connection to the rocker track (24), in particular to the friction wheel rail (50), when it engages with the second stabilising wheel (60).

50. Transfer system (12) as claimed in one of claims 47 to 49, **characterised in that** a freewheel device co-operates with the other stabilising wheel (60).

51. Transfer system (12) as claimed in one of the preceding claims, **characterised in that** when the stop region (43) of the drive element (26) is co-operating with the stop element (44), the lifting rocker (22) is retained in the retaining position and the conveyor means (19) is also driven in the same direction of rotation by the common drive mechanism (18).

52. Transfer system (12) as claimed in one of the preceding claims, **characterised in that** the lifting frame (17) can be displaceably guided relative to the base frame (15) at least in a direction oriented approximately perpendicular to the transfer plane (21).

## Revendications

1. Dispositif de déplacement (12) d'une installation de transport (1) présentant au moins une bande de convoyage (3, 4, 5), en particulier pour l'éclusage et/ou l'éclusage au dehors de matériaux à transporter (2), avec un châssis de base (15), avec un dispositif de déplacement (16) comprenant un bâti de levage (17), un dispositif d'entraînement (18) ainsi qu'au moins un moyen de transport (19), qui forme un plan de déplacement (21), et au moins un dispositif de levage (20) au moyen duquel le bâti de levage (17) et de ce fait le plan de déplacement (21) formé par le moyen de transport (19) peut être déplacé d'une manière réversible d'une position de réserve se trouvant en dessous d'un plan de convoyage (14) de l'installation de transport (1) en une position de fonctionnement située au-dessus du plan de transport (14), et le dispositif d'entraînement (18) est relié, quant à son entraînement, à la fois au moyen de transport (19) et aussi au dispositif de levage (20), **caractérisé en ce que** le dispositif d'entraînement (18) est retenu au bâti de levage (17), et que le dispositif de levage (20) comprend une bascule de levage (22) qui est logée d'une manière déplaçable au châssis de base (15) en face d'un axe (23) d'une manière réversible d'une position de repos dans une position de retenue, et lorsque la bascule de levage (22) se trouvant en position de repos, le bâti de levage (17) avec le moyen de transport (19) est disposé dans la position de réserve, et lorsque la bascule de levage (22) se trouve en position de retenue, le bâti de levage (17) avec le moyen de transport (19) est disposé en position de fonctionnement, où la bascule de levage (22) présente au moins un chemin de coulisse (24) qui est disposé dans la direction perpendiculaire à l'axe (23) à une distance variable (25) à celui-ci, et **en ce qu'**un élément d'entraînement (26) du dispositif d'entraînement (18) est en liaison d'entraînement avec le chemin de coulisse (24) de la bascule de levage (22) en partant de sa position de repos jusqu'à l'atteinte de la position de retenue, et après l'atteinte de la position de retenue, l'élément d'entraînement (26) est hors liaison d'entraînement avec le chemin de coulisse (24), ou bien **en ce que** l'élément d'entraînement (26) du dispositif d'entraînement (18) est toujours en liaison d'entraînement avec le chemin de coulisse (24) de la bascule de levage (22) et, après l'atteinte de la position de retenue, la liaison d'entraînement entre l'élément d'entraînement (26) et le dispositif d'entraînement (18) est interrompue.

2. Dispositif de déplacement (12) selon la revendication 1, **caractérisé en ce que** l'élément d'entraînement (26) est associé au dispositif de levage (20), est retenu au bâti de levage (17) et peut tourner autour d'un axe de rotation (27) orienté parallèlement à l'axe (23).

3. Dispositif de déplacement (12) selon la revendication 1 ou 2, **caractérisé en ce que** l'axe (23) de la bascule de levage (22) est orienté dans la direction perpendiculaire à une direction de transport du moyen de transport (19).

4. Dispositif de déplacement (12) selon l'une des revendications précédentes, **caractérisé en ce que** le chemin de coulisse (24) de la bascule de levage (22), en regardant dans la direction de son axe (23), est réalisé en forme de V.

5. Dispositif de déplacement (12) selon l'une des revendications précédentes, **caractérisé en ce que** le chemin de coulisse (24) de la bascule de levage (22) est disposé à une section orientée vers l'axe (23).

6. Dispositif de déplacement (12) selon l'une des revendications précédentes, **caractérisé en ce qu'**en position de repos de la bascule de levage (22), l'écart (25) du chemin de coulisse (24) à l'axe (23) de la bascule de levage (22) représente dans un plan (28) s'étendant verticalement à travers l'axe (23) un maximum.

7. Dispositif de déplacement (12) selon l'une des revendications précédentes, **caractérisé en ce qu'**en position de repos de la bascule de levage (22), l'écart (25) du chemin de coulisse (24) à l'axe (23) de la bascule de levage (22) est réalisé plus petit au fur et à mesure qu'augmente la distance (30) au plan (28) passant verticalement à travers l'axe (23) par rapport à l'écart maximal (25).

8. Dispositif de déplacement (12) selon l'une des revendications précédentes, **caractérisé en ce que** le chemin de coulisse (24) présente des sections partielles (31, 32) qui, en partant de leur écart maximal (25) à l'axe (23), s'étendent chacune d'une manière rectiligne.

9. Dispositif de déplacement (12) selon la revendication 8, **caractérisé en ce qu'**il est disposé entre les sections partielles (31, 32) du chemin de coulisse (24), dans la zone de leur écart maximal (25) à l'axe (23), une zone de transition (33) réalisée en une forme concave.

10. Dispositif de déplacement (12) selon l'une des revendications précédentes, **caractérisé en ce qu'**en position de repos de la bascule de levage (22), le chemin de coulisse (24) est réalisé d'une manière symétrique au plan (28) passant verticalement à travers l'axe (23).

11. Dispositif de déplacement (12) selon l'une des revendications précédentes, **caractérisé en ce qu'**en position de repos de la bascule de levage (22), l'axe de rotation (27) de l'élément d'entraînement (26) est disposé dans la direction perpendiculaire en dessous de l'axe (23) de la bascule de levage (22).

12. Dispositif de déplacement (12) selon l'une des revendications précédentes, **caractérisé en ce qu'**en position de retenue de la bascule de levage (22), l'axe de rotation (27) de l'élément d'entraînement (26) est disposé dans la direction perpendiculaire en dessous de l'axe (23) de la bascule de levage (22).

13. Dispositif de déplacement (12) selon l'une des revendications précédentes, **caractérisé en ce que,** lorsque la bascule de levage se trouve en position de repos, le chemin de coulisse (24), en partant de l'élément d'entraînement (26) par rapport à un plan (53) s'étendant horizontalement, est orienté selon un angle (54) croissant par rapport à celui-ci.

14. Dispositif de déplacement (12) selon la revendication 13, **caractérisé en ce que** l'angle (54) représente entre 0,5° et 7°, de préférence entre 1° et 3°, en particulier 2°.

15. Dispositif de déplacement (12) selon l'une des revendications précédentes, **caractérisé en ce que** la liaison d'entraînement est réalisée entre l'élément d'entraînement (26) et la bascule de levage (22) par une liaison dentée en prise, comme par exemple une roue dentée (34) avec une baguette dentée (35).

16. Dispositif de déplacement (12) selon la revendication 15, **caractérisé en ce que** la baguette dentée (35) forme une zone partielle du chemin de coulisse (24).

17. Dispositif de déplacement (12) selon l'une des revendications précédentes, **caractérisé en ce que** l'élément d'entraînement (26) comprend à son pourtour en outre une zone d'appui (39) qui s'appuie à une face de support (40) réalisée à la bascule de levage (22).

18. Dispositif de déplacement (12) selon la revendication 17, **caractérisé en ce que** la zone d'appui (39) est réalisée à l'élément d'entraînement (26) par une roue d'appui (41).

19. Dispositif de déplacement (12) selon la revendication 17, **caractérisé en ce que** la face d'appui (40) est réalisée à un rail d'appui (42) qui forme un composant de la bascule de levage (22).

20. Dispositif de déplacement (12) selon la revendication 17 ou 19, **caractérisé en ce que** la face d'appui (40) du rail d'appui (42), quant à son extension longitudinale, est adaptée à une extension longitudinale de la baguette dentée (35).

21. Dispositif de déplacement (12) selon l'une des revendications précédentes, **caractérisé en ce que** l'élément d'entraînement (26), à son pourtour, comprend en outre une zone de butée (43) qui, après l'atteinte de la position de retenue de la bascule de levage (22), s'appuie à un élément de butée (44) réalisé à la bascule de levage (22).

22. Dispositif de déplacement (12) selon la revendication 21, **caractérisé en ce qu'**il est disposé à des extrémités éloignées les unes des autres des sections partielles (31, 32) du chemin de coulisse (24) respectivement un élément de butée (44).

23. Dispositif de déplacement (12) selon la revendication 21 ou 22, **caractérisé en ce que** les éléments de butée (44) sont retenus à un rail de support (45), et ceux-ci forment un autre composant de la bascule de levage (22).

24. Dispositif de déplacement (12) selon la revendication 23, **caractérisé en ce qu'**une extension longitudinale du rail de support (45), au côté orienté vers l'axe (23), correspond à peu près à celle du chemin de coulisse (24).

25. Dispositif de déplacement (12) selon l'une des revendications précédentes, **caractérisé en ce que** l'élément de butée (44) forme une face de butée (46) orientée vers la zone de butée (43) de l'élément d'entraînement (26), qui est réalisée dans une section coopérant avec l'élément d'entraînement (26) d'une manière diamétralement opposée à la zone de butée (43) de celui-ci.

26. Dispositif de déplacement (12) selon l'une des revendications précédentes, **caractérisé en ce que** la baguette dentée (35), dans son extension longitudinale, se termine en amont de l'élément de butée (44).

27. Dispositif de déplacement (12) selon l'une des revendications précédentes, **caractérisé en ce que,** lors d'une zone de butée coopérante (43) de l'élément d'entraînement (26) avec l'élément de butée (44) de la bascule de levage (22), la roue dentée (34) est hors liaison d'entraînement avec la baguette dentée (35).

28. Dispositif de déplacement (12) selon l'une des revendications précédentes, **caractérisé en ce que** l'élément d'entraînement (26) comprend en outre un corps de base (47).

29. Dispositif de déplacement (12) selon l'une des revendications précédentes, **caractérisé en ce que** sont retenues au corps de base (47) la roue dentée (34) et la roue de support (41).

30. Dispositif de déplacement (12) selon l'une des revendications précédentes, **caractérisé en ce que** la roue dentée (34), la zone d'appui (39) et la zone de butée (43) sont disposées directement les unes à côté des autres dans la direction de l'axe de rotation (27).

31. Dispositif de déplacement (12) selon l'une des revendications précédentes, **caractérisé en ce que** le corps de base (47) de l'élément d'entraînement (26) est relié d'une manière immobile en rotation à un arbre d'entraînement (48), l'arbre d'entraînement (48) étant logé d'une manière tournante dans le bâti de levage (17), et l'arbre d'entraînement (48) est en liaison d'entraînement avec le dispositif d'entraînement (18).

32. Dispositif de déplacement (12) selon l'une des revendications 1 à 14, **caractérisé en ce que** la liaison d'entraînement entre l'élément d'entraînement (26) et la bascule de levage (22) est formée par une liaison de frottement, comme une roue de frottement (49) avec un rail de roue de frottement (50).

33. Dispositif de déplacement (12) selon la revendication 32, **caractérisé en ce que** l'élément d'entraînement (26) présente à son pourtour en outre une zone de butée (51) qui, après l'atteinte de la position de retenue de la bascule de levage (22), s'appuie sur un élément de butée (44) formé à la bascule de levage (22).

34. Dispositif de déplacement (12) selon la revendication 32 ou 33, **caractérisé en ce que** la zone de butée (51) de l'élément d'entraînement (26) est formée par une roue de butée (52).

35. Dispositif de déplacement (12) selon la revendication 34, **caractérisé en ce que** la roue de butée (52) est logée par rapport à la roue de frottement (49) d'une manière tournante à un arbre d'entraînement (48).

36. Dispositif de déplacement (12) selon l'une des revendications 32 à 35, **caractérisé en ce qu'**il est disposé entre la roue de butée (52) et l'arbre d'entraînement (48) un dispositif à roue libre.

37. Dispositif de déplacement (12) selon l'une des revendications 32 à 35, **caractérisé en ce que** la roue de butée (52) est reliée d'une manière immobile en rotation à l'arbre d'entraînement (48).

38. Dispositif de déplacement (12) selon l'une des revendications 32 à 37, **caractérisé en ce qu'**il est disposé aux extrémités éloignées les unes des autres des sections partielles (31, 32) du chemin de coulisse (24) respectivement un élément de butée (44).

39. Dispositif de déplacement (12) selon l'une des revendications 32 à 38, **caractérisé en ce que** les éléments de butée (44) sont retenus à un rail de support (45), et ceux-ci forment un autre composant de la bascule de levage (22).

40. Dispositif de déplacement (12) selon la revendication 39, **caractérisé en ce qu'**une extension longitudinale du rail de support (45) au côté orienté vers l'axe (23) correspond à peu près celle du chemin de coulisse (24).

41. Dispositif de déplacement (12) selon l'une des revendications 32 à 40, **caractérisé en ce que** l'élément de butée (44) forme une face de butée (46) orientée vers la zone de butée (51) de l'élément d'entraînement (26), qui est réalisée dans une section coopérant avec l'élément d'entraînement (26) d'une manière diamétralement opposée à la zone de butée (51) de celui-ci.

42. Dispositif de déplacement (12) selon l'une des revendications 32 à 41, **caractérisé en ce que** le rail de roue de frottement (50) se termine dans son extension longitudinale en amont de l'élément de butée (44).

43. Dispositif de déplacement (12) selon l'une des revendications 32 à 42, **caractérisé en ce que** lors d'une zone de butée coopérante (51) de l'élément d'entraînement (26) avec l'élément de butée (44) de la bascule de levage (22), la roue de frottement (49) est hors liaison d'entraînement avec le rail de roue de frottement (50).

44. Dispositif de déplacement (12) selon l'une des revendications 32 à 43, **caractérisé en ce que** la roue de frottement (49) de l'élément d'entraînement (26) est reliée d'une manière immobile en rotation à l'arbre d'entraînement (48), où l'arbre d'entraînement (48) est logé d'une manière tournante dans le bâti de levage (17), et l'arbre d'entraînement (48) est en liaison d'entraînement avec le dispositif d'entraînement (18).

45. Dispositif de déplacement (12) selon l'une des revendications 32 à 44, **caractérisé en ce qu'**il est formé à la bascule de levage (22), au côté du chemin de coulisse (24) éloigné de l'axe (23), une voie de support (55) s'étendant à peu près parallèlement au chemin de coulisse (24), et est associé à l'élément d'entraînement (26) de la bascule de levage (22) au moins un élément d'application par pression (56) qui s'appuie sur la voie de support (55).

46. Dispositif de déplacement (12) selon la revendication 45, **caractérisé en ce que** l'élément d'application par pression (56) est formé par au moins un rouleau d'application par pression (57).

47. Dispositif de déplacement (12) selon l'une des revendications 32 à 46, **caractérisé en ce que** l'élément d'entraînement (26) comprend une roue d'entraînement (58), en particulier une roue de frottement (49) et, après l'atteinte de la position de retenue de la bascule de levage (22), la roue d'entraînement (58) est hors liaison d'entraînement avec le chemin de coulisse (24) formé par le rail de roue de frottement (50), où dans cette position de retenue sont associées à la roue d'entraînement (58) comme éléments de butée (44) à la bascule de levage (22) une première ainsi qu'une deuxième roue de support (59, 60).

48. Dispositif de déplacement (12) selon la revendication 47, **caractérisé en ce que** la première roue de support (59), dans l'extension longitudinale ultérieure (24) du chemin de coulisse, est disposée à une distance de celui-ci et est logée d'une manière tournante à la bascule de levage (22).

49. Dispositif de déplacement (12) selon la revendication 47 ou 48, **caractérisé en ce que** l'autre roue de support (60) est logée d'une manière tournante dans une zone d'extrémité du chemin de coulisse (24) à la bascule de levage (22) et est disposée de telle sorte que la roue d'entraînement (58), lors de la prise avec la deuxième roue de support (60), est hors liaison d'entraînement avec le chemin de coulisse (24), en particulier le rail de roue de frottement (50).

50. Dispositif de déplacement (12) selon l'une des revendications 47 à 49, **caractérisé en ce qu'**il est associé à l'autre roue de support (60) un dispositif à roue libre.

51. Dispositif de déplacement (12) selon l'une des revendications précédentes, **caractérisé en ce que** lors d'une zone de butée coopérante (43) de l'élément d'entraînement (26) avec l'élément de butée (44), la bascule de levage (22) est maintenue en position de retenue, et **en ce que** le moyen de transport (19) est entraîné en outre dans la même direction de rotation par le dispositif d'entraînement commun (18).

52. Dispositif de déplacement (12) selon l'une des revendications précédentes, **caractérisé en ce que** le bâti de levage (17) est guidé d'une manière ajustable relativement au bâti de base (15) au moins approximativement dans une direction orientée verticalement au plan de déplacement (21).
